(19) **Europäisches Patentamt**
**European Patent Office**
**Office européen des brevets**

(11) **EP 1 867 532 B1**

(12) **EUROPEAN PATENT SPECIFICATION**

(45) Date of publication and mention
of the grant of the patent:
**29.02.2012 Bulletin 2012/09**

(51) Int Cl.:
***B60R 21/26*** (2011.01)     ***B01J 7/00*** (2006.01)

(21) Application number: **07018732.3**

(22) Date of filing: **27.11.2002**

(54) **Inflator**

Gasgenerator

Générateur de gaz

(84) Designated Contracting States:
**DE FR**

(30) Priority: **30.11.2001 JP 2001367283**
**30.11.2001 JP 2001367536**
**12.08.2002 JP 2002234431**
**03.09.2002 JP 2002258010**
**11.09.2002 JP 2002264946**
**07.11.2002 JP 2002323737**

(43) Date of publication of application:
**19.12.2007 Bulletin 2007/51**

(62) Document number(s) of the earlier application(s) in
accordance with Art. 76 EPC:
**02783660.0 / 1 449 724**

(73) Proprietor: **Daicel Chemical Industries, Ltd.**
**Kita-ku,**
**Osaka-shi**
**Osaka 530-0001 (JP)**

(72) Inventors:
• **Matsuda, Naoki**
**Himeji-shi**
**Hyogo 671-2201 (JP)**
• **Iwai, Yasunori**
**Shijyonawate-shi**
**Osaka 575-0051 (JP)**
• **Katsuda, Nobuyuki**
**Himeji-shi**
**Hyogo 671-1146 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 741 064     EP-A1- 0 602 862**
**WO-A-99/15376     WO-A-99/15377**
**US-A- 5 615 912     US-A- 5 836 610**

**EP 1 867 532 B1**

**Description**

Technical Field to which the Invention belongs

The present invention relates to an inflator according to the preamble of claim 1. Such an inflator is known from JP-A-9-76870. The present invention also provides an inflator in which pieces of a broken rupturable plate or combustion residues of a gas generating agent is prevented from flowing out of the inflator.

Prior Art

As an inflator used in an air bag system for an automobile, there are a type in which an air bag is inflated by using only combustion gas of a gas generating agent and also a type in which an air bag is inflated by using combustion gas of a gas generating agent and pressurized gas. In either type of the inflators, it is required that combustion residues generated at the time of combustion of the gas generating agent, for example, powdery metal or metal oxide generated due to components of the gas generating agent is never discharged into the air bag. Therefore, such a trial has been made that generation of combustion residues is suppressed by changing composition of the gas generating agent or a structure of the inflator.

In addition, there is a type in which an air bag is inflated by using only pressurized gas. However, with a development of a inflator for an inflating-type safety system for an automobile, an inflator using pressurized gas and a gas generating agent together is attracting attention.

Also, such a trial has been made that a filter is disposed to prevent pieces of a broken rupturable plate from flowing outside, or that generation of combustion residues is suppressed by changing composition of the gas generating agent, or a structure of the inflator.

As the related prior arts, there are JP-A 9-76870, US-A 3,966,226 and US-A 4,018,457.

An essential requirement in designing the inflator is that an air bag has to be inflated by a predetermined amount within a predetermined time to actuate the air bag effectively, and various proposals about the structure has been made conventionally. For example, there is JP-A 8-282427. As other related prior arts, there have been known JP-B 44-10443, US-A 6,189,922, and JP-A 2002-166817.

Since the inflator is produced for an automobile, the weight and size of the inflator which influences a weight of an automobile are important design requirements. Accordingly, further reduction in weight of an inflator is required while maintaining its original functions.

Disclosure of the Invention

An object of the present invention is to provide an inflator in which a gas generating agent and a structure of the inflator are improved and combined to obtain a synergistic effect so that an amount of combustion residues discharged out of the inflator is suppressed.

To solve the above object, the present invention provides the inflator according to claim 1. Preferred embodiments are claimed in the subclaims. An example, which does not form part of the invention but which is useful for a better comprehension of the invention, relates to (I-1) an inflator in which an air bag is inflated by combustion gas generated by combustion of a gas generating agent and a pressurized medium, comprising a means for making the combustion gas strike against one or at least wall surfaces so that combustion residues adhere to the one or at least two wall surfaces, and also a means for making the combustion gas contact with the pressurized medium so that the combustion residues contained in combustion gas are cooled and solidified due to a temperature difference, wherein a melting point of the combustion residues generated due to combustion of the gas generating agent is equal to or more than a discharging temperature of a gas generated from the gas generating agent.

Another example, which does not form part of the invention but which is useful for a better comprehension of the invention, relates to (I-2) an inflator in which an air bag is inflated by an action of combustion gas generated by combustion of a gas generating agent and a pressurized medium, comprising a means for changing a flowing direction of combustion gas to make combustion residues in the combustion gas adhere to one or at least wall surfaces, and also a means for making the combustion gas contact with the pressurized medium so that the combustion residues in combustion gas are cooled and solidified due to a temperature difference, wherein the melting point of the combustion residues generated due to combustion of the gas generating agent is equal to or more than a discharging temperature of a gas generated from the gas generating agent.

The above-described examples are provided with the means for arresting the combustion residues contained in combustion gas of the gas generating agent respectively, the following advantageous effects (1) to (3) can be obtained.

2

Advantageous effect (1)

By associating the discharging temperature of a gas generated from a gas generating agent and the melting point of a combustion residue contained in the combustion gas, generation of a massive (slag-like) combustion residue can be promoted. The temperature of the discharged gas of the gas generating agent can be obtained on the basis of a pressure inside the tank (an actually measured value) and a generated gas amount obtained at the time of being burnt in the tank having a predetermined volume and further the specific heat of the generated gas, for example, according to the following formula (values other than T2 in the formula can be obtained by calculations or the like). When the melting point of the residue becomes sufficiently higher than the temperature of the discharged gas (not less than 100°C, preferably not less than 500°C), the combustion residue can be easily solidified and becomes massive (slag-like), and it remains inside the inflator to be suppressed from being discharged outside of the inflator.

$$\frac{C_{V_1} M_1 T_1}{a} + \frac{C_{V_2} M_2 T_2}{b} = \frac{\left\{ \dfrac{C_{V_1} M_1 + C_{V_2} M_2}{M_1 + M_2} \right\} \times (M_1 + M_2) \times T_3}{c}$$

In the formula, the meanings of symbols are as follows:

a term: calorie of initial air in a tank
b term: calorie of discharged gas (gas discharged into the tank)
c term: calorie of mixed gaseous matter in the tank after actuation of the inflator (after mixed with initial air in the tank)
Cv1: average specific heat of air
M1: the mole number of air
T1: air (before actuation) temperature
Cv2: average specific heat of discharged gas
M2: the mole number of discharged gas
T2: discharged gas temperature
T3: gas temperature after being mixed (calculated according to an formula of state of ideal gas)

Advantageous effect (2)

By cooling the combustion gas due to a temperature difference from the pressurized medium, combustion residues can be solidified. When the combustion gas with a high temperature and the pressurized medium with a lower temperature contact with each other, the combustion residues with a high temperature are cooled and solidified to becomes massive (slag-like) and remains inside the inflator so that the residues are suppressed from being discharged outside the inflator. The advantageous effect (2) can be further improved owing to a synergism with the advantageous effect (1).

Advantageous effect (3)

By making combustion gas flow strike against a wall surface, combustion residues can adhere to the wall surface. Since the combustion residues contained in the combustion gas has a high temperature and the pressurized medium has a lower temperature, the combustion residues is solidified when the residues contact with the pressurized medium as in the above advantageous effect (2). And further, the combustion residues, being solidified are made to strike against the wall surface and thereby, the amount of combustion residues discharged outside of the inflator can be reduced. The advantageous effect (3) can be further improved owing to a synergism with the advantageous effects (1) and (2).

In order to easily obtain the advantageous effects (1) to (3) in the respective above examples, a preferable inflator comprises an outer shell made of a cylindrical pressurized medium chamber housing, a pressurized medium chamber charged with a pressurized medium, a gas generator which is connected to one end of the pressurized medium chamber and includes an ignition means and a gas generating agent accommodated in a gas generator housing, and a diffuser portion connected to the other end of pressurized medium chamber, wherein a first rupturable plate closes between the pressurized medium chamber and the gas generator, a second rupturable plate closes between the pressurized medium chamber and the diffuser portion, and further, a cap, which has a gas ejecting hole in at least one of the side surface and end surface, covers the first rupturable plate from the pressurized medium chamber side.

As describe above, the first rupturable plate closes between the pressurized medium chamber and the gas generator, and thereby, even when the gas generating agent is burnt, a sufficient temperature difference of the combustion gas and the pressurized medium can be obtained to exhibit a solidifying effect of the combustion residues. Accordingly, even when the inflator is kept under a high temperature (for example, inside an automobile including an air bag apparatus provided with an inflator, in the summer), a temperature of the pressurized medium is much lower than a discharging temperature of the gas generating agent, thereby exhibiting a solidifying effect of the combustion residues. However, in case of not having the first rupturable plate, the pressurized medium is heated by the combustion heat of the gas generating agent, so that the temperature difference between the pressurized medium and the discharged gas becomes small, thereby spoiling the solidifying effect of the combustion residues.

Also, since the gas generating agent exist under a normal pressure, deterioration of the gas generating agent due to pressure is reduced as compared with a case of existing under a high pressure. Further, by providing the cap having a gas ejecting hole in at least one of a side surface and an end surface, the combustion gas easily strikes against a wall surface of the pressurized medium chamber housing. Incidentally, in order to enhance an arresting effect of the combustion residue, a cap can also be provided in the second rupturable plate side.

Still another example, which does not form part of the invention but which is useful for a better comprehension of the invention, relates to (I-4) an inflator comprising an outer shell made of a cylindrical pressurized medium chamber housing, a pressurized medium chamber charged with a pressurized medium, a gas generator which is connected to one end of the pressurized medium chamber and includes an ignition means and a gas generating agent accommodated in a gas generator housing, and a diffuser portion connected to the other end of pressurized medium chamber, wherein a first rupturable plate closes between the pressurized medium chamber and the gas generator, a second rupturable plate closes between the pressurized medium chamber and the diffuser portion, a cap covers the first rupturable plate from the pressurized medium chamber side and further, at least one selected from the following requirements (a) to (c) is provided.

(a) an inner wall surface of the pressurized medium chamber housing is rough;
(b) the gas ejecting hole is oriented such that combustion gas ejected from the gas ejecting hole does not strike against an inner wall surface of a pressurized medium chamber housing in the shortest distance; and
(c) a barrier member is disposed in the vicinity of the gas ejecting hole, and combustion gas ejected from the gas ejecting hole moves after it strikes against the barrier member.

Since the above-described examples are provided with the requirements (a) to (c), the following advantageous effects (4) to (6) can be obtained in addition to the advantageous effects (2) and (3).

Advantageous effect (4)

As described in the requirement (a), when the inner wall surface of the pressurized medium chamber housing is rough, the combustion residues are easily caught and arrested by uneven part of the rough surface, so that discharging of the combustion residues is suppressed.

In order to exhibit better the advantageous effect (4), in the requirement (a), preferably, the inner wall surface of the pressurized medium chamber housing forming the pressurized medium chamber is provided with a groove (s) formed continuously or discontinuously in the circumferential direction (preferably, its depth is not less than 0.1 mm, and more preferably, not less than 0.2 mm) . By forming such a groove, the housing weight can be reduced corresponding to the groove. Advantageous effect (5)

As described in the requirement (b), by restricting the opening direction of the gas ejecting hole provided in the cap, the number of contacts of the combustion gas and the wall surface can be increased (that is, a contacting time can be elongated), so that the combustion residues easily adhere to the wall surface, and discharging of the combustion residues outside the inflator is suppressed.

In order to exhibit better the advantageous effect (5), in the requirement (b), the aspect in which the gas ejecting hole is provided in a side surface of the cap to be oriented towards the gas generator; the aspect in which the gas ejecting hole is provided in a side surface of the cap and a member for circumferentially restricting the ejecting direction of combustion gas from the gas ejecting hole is provided; and the aspect in which the gas ejecting hole is provided in an end surface of the cap and a member for circumferentially restricting the ejecting direction of combustion gas from the gas ejecting hole is provided can be employed.

Advantageous effect (6)

As described in the requirement (c), combustion gas ejected from the gas ejecting hole strikes against the barrier member, and therefore, combustion residues first adhere to the barrier member to be arrested. And a flow of the combustion gas is disturbed by striking against the barrier member, so that the number of times of contacts of combustion gas and the wall surface can be increased (that is, the contacting time can be elongated), and consequently, the advantageous effect (5) is also obtained substantially and discharging of the combustion residues outside the inflator is suppressed.

In order to exhibit better the advantageous effect (6), in the requirement (c), the following aspects can be employed;

An aspect in which the barrier member is cylindrical, one end thereof is integrated with the end surface of the cap and closed, the other end is opened, and a side surface is formed to face, with a gap, the gas ejecting hole provided in a side surface of the cap, and the combustion gas moves from the opened end after the combustion gas strikes against an inner wall of the side surface on the cylindrical member.

An aspect in which the barrier member is disk-shaped, integrated with end surface of the cap and is extended from the end surface of the cap towards an inner wall surface of the pressurized medium chamber housing, and after the combustion gas ejected from the gas ejecting hole provided in the side surface of the cap strikes against a peripheral edge portion of the barrier member, it moves from a clearance between the inner wall surface of the pressurized medium chamber housing and the peripheral edge portion of the barrier member.

An aspect in which the barrier member is disk-shaped, integrated with the end surface of the cap and is extended from the end surface of the cap towards an inner wall surface of the pressurized medium chamber housing to make a peripheral edge portion thereof abut on the inner wall surface, a gas passing port is provided in the peripheral edge portion of the barrier member and a member for circumferentially restricting an ejecting direction of gas from the gas passing port is provided, and combustion gas ejected from the gas ejecting hole provided in the side surface of the cap is ejected from the gas passing port.

The inflator of the above-described example can be provided with the requirements (a) and (b), the requirements (a) and (c), the requirements (b) and (c), or the requirements (a), (b) and (c).

Further, in the inflator of the above-described example, such an aspect can be employed that the cap has a flange portion formed by bending an opening peripheral edge portion outwardly and the gas generator housing is fixed at the flange portion by crimping part of the gas generator housing.

Further, in the inflator of the above-described example, such an aspect can be employed that a pressurized medium charging hole is formed in a side surface of the pressurized medium chamber housing, and the charging hole is closed by a pin after the pressurized medium is charged. In the inflator of the above-described example, such an aspect can be employed that the pin is protruding into the pressurized medium chamber and a protruding portion thereof has such a length that combustion gas flow of the gas generating agent strikes against the protruding portion. By securing some length in the protruding portion of the pin in this manner, combustion gas is made to strike against the pin so that the combustion residues adhere to the pin.

Also in the above-described example, the advantageous effect (1) can further be exhibited by using a gas generating agent in which a melting point of the combustion residue generated by combustion of the gas generating agent is not less than a discharging temperature of gas generated from the gas generating agent.

In the above-described example, such an aspect can be employed that the pressurized medium chamber housing is symmetrical in the axial and radial directions. By employing such a symmetrical shape, the orientation of the pressurized medium chamber housing does not have to be adjusted at a time of assembling, so that an assembling work is facilitated.

In the above-described example, such an aspect can be employed that the gas generator housing and the pressurized medium chamber housing are connected by resistance-welding.

The gas generating agent used in the present example can be determined in relation with composition of the pressurized medium as follows:

The pressurized medium comprises an inert gas such as argon or helium (nitrogen is also included in the inert gas in the present example). When the pressurized medium has a composition which does not include oxygen substantially, the argon works to promote the thermal expansion of the pressurized medium, and helium is preferably contained because the leakage of the pressurized medium can be detected easily and consequently, distribution of imperfect products can be prevented. Also, a preferable pressurized medium does not include oxygen, but oxygen maybe included to promote combustion of the gas generating agent. In case of including oxygen, an amount of addition thereof is preferably 10 mole% or less, more preferably 5 mole% or less. A charging pressure of the pressurized medium is preferably 10,000 to 70,000 kPa, more preferably 30,000 to 60,000 kPa.

As the gas generating agent, for example, it is possible to use a material including fuel and oxidizing agent, or fuel, oxidizing agent and slag-forming agent, being mixed with binder if required, and formed into a desired shape. If such a gas generating agent is used, a gas generated by combustion of the agent can be used for inflating and developing an air bag together with the pressurized medium. Especially, when the gas generating agent including the slag-forming agent is used, slag is easily made, so that an amount of mist-like combustion residues discharged from the inflator can be largely reduced. However, in case of reducing a charged amount of gas generating agent and generated residues, it is unnecessary to use a slag-forming agent.

A preferable fuel can be one or at least two selected from the group consisting of guanidine derivatives such as nitroguanidine (NQ), guanidine nitrite (GN), guanidine carbonate, amino nitroguanidine, amino guanidine nitrite, amino guanidine carbonate, diamino guanidine nitrite, diamino guanidine carbonate, and triamino guanidine nitrite. As fuel, one or at least two selected from the group consisting of tetrazole and tetrazole derivatives can be used.

As the oxidizing agent, one or at least two selected from the group consisting of strontium nitrate, potassium nitrate, ammonium nitrate, potassium perchlorate, copper oxide, ferrous oxide, a basic copper nitrate are preferably used.

As the slag-forming agent, one or at least two selected from the group consisting of acid clay, talc, bentonite, diatomaceous earth, kaolin, silica, alumina, sodium silicate, silicone nitride, silicon carbide, hydrotalsite, and a mixture thereof are preferably used.

As the bonding agent, one or at least two selected from the group consisting of sodium salt of carboxymethylcellulose, hydroxyethyl cellulose, starch, polyvinyl alcohol, guar gum, microcrystal cellulose, polyacrylamide and calcium stearate are preferably used.

when the pressurized medium and the gas generating agent composed in the above manner are used, a mole ratio (A/B) of an amount of the pressurized medium (A moles) and an amount of the gas generated by combustion of the gas generating agent (B moles) is adjusted to preferably 0.2 to 10, more preferably 0.4 to 4. The mole ratio A/B may be described as a mole ratio A1/A2 in the following explanation.

By adjusting the mole ratio of an amount of the pressurized medium and an amount of the gas generated by combustion of the gas generating agent in this manner, a delay in rising of an inflator internal pressure can be prevented and an excessive rising of an internal pressure of the inflator can be prevented. Thus, an internal pressure of the inflator can be controlled at a time of combustion of the gas generating agent, and thereby, the volume of the pressurized medium chamber housing is reduced (that is, the length and/or the width (diameter) of the pressurized medium chamber housing is reduced), and even if the internal pressure rises correspondingly, an internal pressure of the inflator at a time of combustion can be prevented from rising excessively. Incidentally, in the inflator of the present example, a weight ratio (X/Y) of a weight (X) of the pressurized medium and a weight (Y) of the gas generating agent is preferably 0.1 to 7, more preferably 0.5 to 5. The weight ratio (X/Y) may be described as a mass ratio B1/B2 in the following explanation.

The gas generating agent used in the present example can include 20 to 60 mass% of nitroguanidine as the fuel and 80 to 40 mass% of the oxidizing agent, and preferably, 30 to 40 mass% of nitroguanidine as the fuel and 70 to 60 mass% of strontium nitrate as the oxidizing agent. Further, the bonding agent (sodium carboxymethylcellulose or the like) and the slag-forming agent (acid clay or the like) can further be mixed in addition to the fuel and the oxidizing agent. In this case, it is preferable that the fuel is 20 to 60 mass%, the oxidizing agent is 40 to 65 mass%, the bonding agent is 3 to 12 mass% (preferably 4 to 12 mass%), and the slag-forming agent is 1 to 20 mass% (preferably 3 to 7 mass%).

According to the inflator of the present example, combustion residues contained in the combustion gas of the gas generating agent can be suppressed from being discharged outside the inflator.

Next, the present invention (II-1) provides an inflator in which an air bag is inflated with combustion gas due to combustion of a gas generating agent and pressurized gas, comprising a pressurized gas chamber which has a outer shell formed by a cylindrical pressurized gas chamber housing and is filled with pressurized gas, a gas generator which is connected to the pressurized gas chamber and includes an ignition means and a gas generating agent accommodated in a gas generator housing, and a diffuser portion which is connected to a different portion from the pressurized gas chamber, a first rupturable plate closing between the pressurized gas chamber and the gas generator, and a second rupturable plate closing between the pressurized gas chamber and the diffuser portion, wherein the diffuser portion is a cap having a plurality of gas discharging holes through which gas passes, and at least one of pieces produced by the broken first and second rupturable plates and residues (combustion residues) contained in combustion gas generated by combustion of the gas generating agent is prevented from flowing outside the inflator.

In this invention, any aspect can be employed such that the diffuser portion is a cap, or that a cap is disposed inside the diffuser portion, and further, the aspect in which the diffuser portion is fixed by welding to the pressurized gas chamber housing, or the aspect in which the diffuser portion is integrated with the pressurized gas chamber housing can be employed.

In this invention, the diffuser portion removes either or both of pieces of the broken first and second rupturable plates and a combustion residue to prevent them from flowing outside the inflator or to reduce an outflow amount thereof.

In an inflator of the present invention (II-2), a cap, having a plurality of gas discharging holes through which gas passes and preventing at least one of pieces of the broken first rupturable plate, and combustion residues of the gas generating agent from flowing outside the inflator, is disposed inside the pressurized gas chamber to cover the first rupturable plate from the pressurized gas chamber side.

In this invention, broken pieces produced by breaking of the first rupturable plate and combustion residues are removed by the cap disposed inside the pressurized gas chamber, thereby preventing them from flowing outside the inflator or to reduce an outflow amount thereof.

In an inflator of the present invention (II-3), a cap, having a plurality of gas discharging holes through which gas passes and preventing at least one of pieces of the broken first rupturable plate and combustion residues of the gas generating agent from flowing outside the inflator, is disposed inside the pressurized gas chamber to cover the first rupturable plate from the pressurized gas chamber side.

In this invention, pieces produced by breaking of the first rupturable plate and combustion residues are removed by the cap disposed inside the pressurized gas chamber, thereby preventing them from flowing outside the inflator or to reduce an outflow amount thereof.

It is preferable that the cap of the above-described invention comprises a cylindrical member having one end opened and the other end closed, and has a plurality of gas discharging holes in at least a peripheral surface thereof.

In the cap of the above-described invention, preferably, the relationship between a distance L between a closed end surface of the cap and a gas discharging hole nearest to the closed end surface and a diameter D of the rupturable plate satisfies the following formula: $L \geq D/2$. In this case, the distance L is preferably 3 to 8 mm, more preferably 4 to 8 mm, and most preferably 5 to 8 mm.

The diameters of a plurality of the gas discharging holes in the cap of the above-described invention are preferably 0.5 to 2 mm and more preferably 0.5 to 1.2 mm, and the total opening area of a plurality of the ejecting holes in a screen is preferably 20 to 1000 $mm^2$ and more preferably 100 to 500 $mm^2$.

It is preferable that the cap of the above-described invention is disposed such that the axial direction of the cap and the axial direction of the pressurized gas chamber housing coincide with each other.

With the above-described cap of the invention, the following advantageous effects (IIa) to (IIc) can be obtained.

(IIa) When the cap is disposed such that the axial direction the cap and the axial direction of the pressurized gas chamber housing coincide with each other, pressurized gas strikes against the closed end surface of the cap and then changes its flow direction to flow out from the ejecting holes in the peripheral surface. Because the gas changes its outflow direction, foreign materials (pieces of the broken rupturable plate or the like) easily remain in a pocket portion from the closed end surface of the screen to the ejecting hole nearest thereto. Incidentally, by mounting the screen at the flange portion in the above manner, no gap is produced between the screen and an inner wall of a gas discharging port, and foreign materials are prevented from flowing out without passing through the screen.

(IIb) When the inflator is actuated and the rupturable plate is broken by an igniter, a central portion of the rupturable plate is positioned near to the igniter and a pressure of the pressurized medium applied from the opposite side becomes the maximum at the central portion, and therefore, the rupturable plate is liable to be broken from the central portion in any event. For this reason, the maximum length of the foreign material produced by breaking the rupturable plate has a length corresponding to a radius of the rupturable plate. Thereby, as described above, if the relationship of $L \geq D/2$ is satisfied, the depth (L) of the pocket portion becomes equal to or more than the length (D/2) of the foreign materials, so that the foreign materials become easier to remain in the pocket portion. That is, the above-described advantageous effect (IIa) is further enhanced.

(IIc) Since the pressurized medium enters from the opening of the screen to be discharged through the ejecting hole on the peripheral surface, foreign materials contained in the pressurized medium is prevented from leaking outside the inflator, and at the same time, outflow pressure of the pressurized medium is also controlled. Further, by controlling the outflow pressure (an outflow amount per unit time) of the pressurized medium with the screen at a time of actuation, the outflow pressure of the pressurized medium is prevented from being influenced by broken state of the rupturable plate.

Still another example, which does not form part of the invention but which is useful for a better comprehension of the invention, relates to (II-10) an inflator according to any one of the inflators described in the above example (II), including means for changing the flow direction of the combustion gas by the cap, making combustion residues contained in the combustion gas adhere to one or at least two portions of the wall surface, further making the combustion gas contact with the pressurized gas, and cooling and solidifying the combustion residues contained in the combustion gas due to a temperature difference, wherein the melting point of the combustion residues generated due to combustion of the gas generating agent is equal to or more than a discharging temperature of a gas generated from the gas generating agent.

In the present example (II-10), the advantageous effects (1) to (3) of the above-described example (I) can be obtained in addition to the above-described operations (IIa) to (IIc) .

Further, in the present example (II-10), with the first rupturable plate closing between the pressurized gas chamber housing and the gas generator, a sufficient temperature difference can be obtained between the combustion gas and the pressurized gas and a solidifying action of the combustion residues can be exhibited even when the gas generating agent is burnt. Accordingly, even when the inflator is left in a high temperature (for example, inside an automobile including an air bag apparatus provided with an inflator, in the summer), the temperature of the pressurized gas becomes remarkably lower than the discharged gas temperature of the gas generating agent so that the solidifying action of the combustion residue is exhibited. However, without the first rupturable plate, the pressurized gas is heated by combustion heat of the gas generating agent, and thereby, the temperature difference between the pressurized gas and the discharge gas becomes small, so that the solidifying action of the combustion residue is weaken.

Also, since the gas generating agent is kept under a normal pressure, its deterioration due to pressure is smaller than that in case of being kept under a high pressure. Further, since the cap having the gas discharging hole in at least one of the side surface and the end surface is provided, combustion gas easily strikes against the wall surface of the pressurized gas chamber housing. Incidentally, in order to enhance the arresting effect of the combustion residues, a cap can also be provided on the second rupturable plate side.

Still another example, which does not form part of the invention but which is useful for a better comprehension of the invention, relates to (II-11) the inflator according to any one of the inflators described in the above example (II) and further provided with at least one selected from the requirements (a), (b) and (c) of the above example (I).

Since the present example is provided with at least one selected from the requirements (a), (b) and (c), the above advantageous effects (4) to (6) can be obtained in addition to the advantageous effects (2) and (3) . Plural combination can be applied to the requirements (a), (b) and (c) as in the above (I).

Further, the example (II) can take an aspect in which the cap has a flange portion and is fixed as in the example (I).

Further, the example (II) can take an aspect in which a pressurized-medium charging hole, a pin and a protruding portion are provided as in the example (I).

Also in the example (II), the advantageous effect (1) can be exhibited as in the above (I) . Further, a relationship among the pressurized gas chamber housing, joining of the gas generator housing and the pressurized gas chamber housing, compositions of the gas generating agent and pressurized gas can be provided as in the example (I).

The gas generating agent and the pressurized gas used in the present example (II) is similar to those in the example (I).

By adjusting the mole ratio of an amount of the pressurized gas and an amount of gas generated by combustion of the gas generating agent in the above manner, an charging amount of the pressurized gas can be reduced. Thereby, even when a volume of the pressurized gas chamber housing is reduced (that is, a length and/or a width (diameter) of the pressurized gas chamber housing is reduced), the same pressure as that before a volume is reduced can be maintained without increasing a charging pressure of the pressurized gas (= the internal pressure in the pressurized gas chamber housing). Incidentally, in the inflator of the present example, the weight ratio (X/Y) of the weight (X) of the pressurized gas and the weight (Y) of the gas generating agent is preferably 0.1 to 7, and more preferably 0.5 to 5.

According to the inflator of the present example, pieces of the broken rupturable plate contained in a gas and combustion residues contained in combustion gas of the gas generating agent can be prevented from being discharged outside the inflator.

Further, an object of the present invention (III) is to provide an inflator in which size and weight is reduced without losing functions of the inflator, and an air bag system using the same.

If an inflator utilizing pressurized gas and combustion gas of an gas generating agent is made compact, maintaining a required charged amount of the pressurized gas (a charging amount required for inflating an air bag), an internal pressure rises because of the reduced internal volume. And, if the gas generating agent is burnt under a high pressure with the rising of the internal pressure, the internal pressure further rises due to generation of a high temperature combustion gas to exceed pressure resistance of the inflator or to raise a burning velocity of the gas generating agent excessively. In result, flowing speed of the gas becomes too high to keep an inflating timing of an air bag within an optimal time for protecting an occupant.

However, when the requirements (1) to (6) determined in the invention (III) are provided and these requirements act in mutual relation, even in the compact inflator with rising internal pressure, the same operation as that before it is compact can be secured without causing the above problems.

An example, which does not form part of the invention but which is useful for a better comprehension of the invention, relates to (III-1) an inflator inflating an air bag with pressurized gas and combustion gas of a gas generating agent, provided with the following requirements (1) to (6).

In other words, the inflator of the example (III-1) is an inflator inflating an air bag with pressurized gas and combustion gas generated by combustion of the gas generating agent, and provided with the following requirements (1) to (6) ;

(1) pressurized gas contains an inert gas but it does not substantially contain oxygen;
(2) in the gas generating agent, a pressure index obtained by the following formula: $rb = \alpha P^n$ (in the formula, rb: burning velocity, $\alpha$: coefficient, P: pressure, and n: pressure index) is 0.8 or less;
(3) a ratio A1/A2 of an amount (mole number) of pressurized gas (A1) and an amount (mole number) of gas generated by combustion of a gas generating agent (A2) is 1 to 20;
(4) a ratio B1/B2 of a mass (B1) of pressurized gas (B1) and a mass (B2) of a gas generating agent is 1 to 20;

(5) a mass of a gas generating agent is 0.5 to 30 g; and

(6) a charging pressure of pressurized gas is 30,000 to 67,000 kPa.

The following is the detailed description.

(1) Pressurized gas contains an inert gas but it does not substantially contain oxygen.

The pressurized gas comprises an inert gas such as argon or helium (nitrogen is also included in the inert gas ). When the pressurized gas has a composition which does not include oxygen substantially, the argon works to promote the thermal expansion of the pressurized gas, and helium is preferably included so that the leakage of the pressurized gas can be detected easily, and thereby, distribution of imperfect products can be prevented.

That the pressurized gas does not substantially contain oxygen means that oxygen is not included positively in the pressurized gas. There are cases such that oxygen gas is mixed in the pressurized gas in a course of charging gas or that oxygen gas is mixed in an inert gas as impurity and can not be completely avoided, therefore, even when oxygen gas is contained in the pressurized gas for such a reason, it is also regarded that oxygen is not substantially contained. When oxygen is included in the pressurized gas, a burning velocity of a gas generating agent in the initial combustion stage rapidly rises to raise an internal pressure of the inflator. However, such a rising of an internal pressure of the inflator is avoided if the pressurized gas does not substantially include oxygen. When oxygen gas is contained in the pressurized gas, it is preferable that a content of oxygen gas is 3 mole% or less.

(2) In the gas generating agent, a pressure index obtained by the following formula: $rb = \alpha P^n$ (in the formula, rb: burning velocity, $\alpha$: coefficient, P: pressure, and n: pressure index) is 0.8 or less.

In the above example, a pressure index (n) was obtained from two formula of $rb1 = \alpha P1^n$ and $rb2 = \alpha P2^n$ after the burning velocity rb1 in a tank of a pressure P1 (70 kg/cm$^2$) was measured and a burning velocity rb2 was measured in a tank of a pressure P2 (100 kg/cm$^2$).

By providing the requirement of a pressure index, rapid rising of a burning velocity in the initial stage of the combustion of the gas generating agent is prevented, so that rising of an internal pressure of the inflator is small. For this reason, even when the thickness of the inflator (the pressurized gas chamber housing) is decreased, a sufficient pressure-resistance can be maintained. Also, the gas generating agent is burnt stably because of the small rising (that is, a little change in the internal pressure) of the internal pressure of the inflator (pressure inside the pressurized gas chamber housing), so that combustion remnants do not occur. The pressure index (n) is preferably 0.1 to 0.8, and more preferably 0.1 to 0.8.

Such a requirement (2) can be provided by adjusting the composition of the gas generating agent. In the requirement (2), when the pressure index exceeds 0.8, the sensitivity to a pressure of the gas generating agent becomes high, that is, a combustion is greatly affected by change in pressure, so that a numerical range in the following requirements (3) to (7) becomes narrow, whichmakes it difficult to conduct an adjustment for providing the respective requirements.

(3) A ratio A1/A2 of an amount (mole number) of pressurized gas (A1) and an amount (mole number) of gas generated by combustion of a gas generating agent (A2) is 1 to 20. A1/A2 is preferably 3 to 15, and more preferably 4 to 10. When A1/A2 is not less than 1, delay of rising of an internal pressure of the inflator is prevented, and when A1/A2 is not more than 20, an excessive rising of an internal pressure of the inflator is prevented.

An amount (mole number) of the pressurized gas (A1) is 0.1 to 2.0 moles, preferably 0.1 to 1.5 moles and more preferably 0.15 to 1.5 moles, while a gas amount (mole number) generated by combustion of the gas generating agent (A2) is 0.01 to 0.2 moles, preferably 0.01 to 0.15 moles and more preferably 0.02 to 0.15 moles.

(4) A ratio B1/B2 of a mass (B1) of pressurized gas (B1) and a mass (B2) of a gas generating agent is 1 to 20. B1/B2 is preferably 3 to 15, and more preferably 4 to 10.

When B1/B2 is not less than 1, delay of rising of an internal pressure of the inflator is prevented, and when B1/B2 is not more than 20, an excessive rising of an internal pressure of the inflator is prevented.

The mass (B1) of the pressurized gas is 5 to 80 g, preferably 5 to 60 g, more preferably 10 to 60 g. An mass (B2) of the gas generating agent is described in the requirement (5).

(5) A mass of a gas generating agent is 0.5 to 30 g. An amount of the gas generating agent is preferably 1 to 20 g, more preferably 1 to 10 g.

(6) A charging pressure of pressurized gas is 30,000 to 67,000 kPa. The charging pressure of the pressurized gas is preferably 35,000 to 60,000 kPa, and more preferably 40,000 to 60,000 kPa.

When the charging pressure is not less than 30,000 kPa, a gas amount sufficient for inflating an air bag can be secured. When a charging pressure is not more than 67, 000 kPa, even with rising of the internal pressure of the inflator due to combustion of the gas generating agent, a sufficient difference between a pressure-resistance upper limit of the inflator and an internal pressure of the inflator can be obtained, so that a range in controlling an internal pressure of the inflator can be made wider.

The inflator of the present example (III-1) is provided with the requirements (1) to (6), and each requirement is mutually associated with each other. When the initial charging pressure is 60, 000 kPa, the size of the inflator can be reduced by 50 mass% or so at maximum by reducing the width or the diameter and the length in order not to change pressure-resistance of the inflator.

Further, the inflator of the present example (III-1) is provided with the requirements (1) to (6) and the internal pressure of the inflator can be controlled more precisely and in a narrower range as compared with the prior art, by mutually related action of the respective requirements. For this reason, a discharging time of a gas from the inflator can be easily controlled and an inflating and developing time of an air bag can be easily adjusted.

In the present example (III-1), it is preferable in the requirement (2) that a combustion flame temperature of the gas generating agent is not more than 3000°C. The combustion flame temperature means a theoretical value of a flame temperature when the gas generating agent is burnt, and it is obtained by theoretical calculation.

When the combustion flame temperature of the gas generating agent becomes excessively high, the combustion gas temperature becomes high, and the pressurized gas temperature further becomes excessively high. Thereby, an internal pressure of the inflator rises, and also, a temperature of the gas that flows into the air bag becomes high. However, such a problem is prevented by setting the combustion flame temperature to the above-described temperature or less.

Further, if the combustion flame temperature exceeds 3000°C, optimal values (central values) in numerical ranges in the requirements (3) to (6) and the following requirement (7) are shifted such that the air bag inflating action due to combustion gas of the gas generating agent is decreased, and therefore, the inflator does not function as one utilizing both the pressurized gas and the combustion gas.

Also, the combustion flame temperature is related with the requirement (5) in particular. When the inflator is actuated and pressurized gas is discharged outside the inflator, the inside of the inflator is decompressed, so that the temperature lowers and the internal pressure lowers. In particular, since the combustion flame temperature is as low as not less than 3000°C, there may be a case such that it takes too much time for discharging the entire gas because of lower gas discharging speed caused by lower internal pressure of the inflator due to the lower temperature. However, by setting the lower limit value of an amount of the gas generating agent to not less than 1 g, the internal pressure can be prevented from lowering due to lower temperature inside the inflator (that is, an internal pressure of the inflator can be controlled), so that the air bag can be inflated within an optimal time. Further, by setting the lower limit value of the gas generating agent amount to not less than 1 g, an internal pressure of the inflator can be controlled as described above but also a gas amount required for inflating an air bag can be supplied. The upper limit value is a numerical value obtained by considering the volume of a generally used inflator.

The combustion flame temperature is more preferably not more than 2500°C and further preferably not more than 2200°C. It is preferable that the lower limit value of the combustion flame temperature is 900°C.

In the present example (III-1) and the like, it is preferable in the requirement (2) that the gas generating agent is a non-azide gas generating agent.

Further, the inflator of the present example (III-1) and the like is preferably provided with the requirement (7) such that a ratio A1/C of an amount (mole numbers) of the pressurized gas (A1) and the total surface area ($cm^2$) of the gas generating agent (C) is 0.004 to 0.05 mole/$cm^2$. A1/C is more preferably 0.004 to 0.04 moles/$cm^2$, and further preferably 0.004 to 0.03 moles/$cm^2$.

When A1/C is not less than 0.004 mole/cm', a ratio of the pressurize gas amount and the gas generating agent falls in a proper range, and thereby, delay of rising of an internal pressure of the inflator is prevented. (Alternatively, the inflator is prevented from being broken due to an excessive rising of an internal pressure of the inflator). When A1/C is not more than 0.05 mole/$cm^2$, the ratio of the pressurized gas amount and the gas generating agent falls in the proper range, and thereby, an excessive rising of an internal pressure of the inflator is prevented (alternatively, delay of a rising of an internal pressure of the inflator is prevented.)

The total surface area ($cm^2$) of the gas generating agent (C) is preferably 10 to 150 $cm^2$, more preferably 20 to 120 $cm^2$, and further preferably 30 to 100 $cm^2$.

Further, the inflator of the present example (III-1) and the like is preferably provided with the requirement (8) such that a ratio C/E of the total surface area ($cm^2$) of the gas generating agent (C) and the total area ($cm^2$) of the gas discharging hole (E) is 0.5 to 4. C/E is preferably 0.5 to 3.5, and further preferably 0.5 to 3.0.

When C/E is not less than 0.5, the entire charged pressurized gas is not discharged until combustion of the gas generating agent is completed, so that the combustion of the gas generating agent is stabilized. When C/E is not more than 4, an internal pressure of the inflator is maintained in a proper range, and therefore, there is no risk such that the inflator is broken.

The total area ($cm^2$) of the gas discharging holes (E) is preferably 5 to 100 $cm^2$, more preferably 10 to 80 $cm^2$, and further preferably 15 to 60 $cm^2$.

The numerical range of each single requirement shown with A1, A2, B1, B2, C and E is a numerical range suitable in case of each independent requirement, and the range of a ratio in case of combining the requirements and the numerical range of each single requirement may not correspond to each other. For example, a ratio of the lower limit value or the upper limit value of A1 and the lower limit value or the upper limit value of A2 may not coincide with a ratio of the lower limit value or the upper limit value of A1/A2. In order to solve the problem by the invention, a numerical value may be selected from the numerical range of the respective requirements (A1, A2 and the like) to achieve a desired value within the range of a ratio in case of combining the respective requirements (A1, A2 and the like).

In the present example (III-1), the inflator has a pressurized gas chamber in which an outer shell is formed by a cylindrical pressurized gas chamber housing and is charged with pressurized gas, and an outer diameter of the pressurized gas chamber housing is preferably 40 mm or less. The outer diameter of the pressurized gas chamber housing is more preferably not more than 35 mm, and further preferably not more than 30 mm.

In the present example (III-1) and the like, the inflator has a pressurized gas chamber in which an outer shell is formed by a cylindrical pressurized gas chamber housing and is charged with pressurized gas, and a ratio (L/D) of an outer diameter (D) and a length (L) of the pressurized gas chamber housing is preferably 1 to 10, more preferably 2 to 10.

Preferably in the present example (III-1) and the like, the inflator has a pressurized gas chamber in which an outer shell is formed by a cylindrical pressurized gas chamber housing and is charged with pressurized gas, and the pressurized gas chamber housing is symmetrical regarding the axial and radial directions.

By making the pressurized gas housing symmetrical, an orientation does not have to be determined at a time of assembling, so that manufacturing is improved.

Preferably in the present example (III-1) and the like, the inflator has a pressurized gas chamber in which an outer shell is formed by a cylindrical pressurized gas chamber housing and is charged with pressurized gas, and the pressurized gas chamber housing is symmetrical regarding the axial and radial directions and both end sides thereof are reduced in diameter. That "both ends side are reduced in diameter" means that diameters at both ends of the pressurized gas chamber housing are made smaller than diameters of the other portion thereof.

By making the pressurized gas housing symmetrical, an orientation does not have to be determined at a time of assembling, so that manufacturing is improved. Further, when both ends are reduced in diameter, joining to another member can be facilitated, in particular, manufacturing in case of joining with resistance-welding is improved.

Preferably in the present example (III-1) and the like, the inflator has a pressurized gas chamber in which an outer shell is formed by a cylindrical pressurized gas chamber housing and is charged with pressurized gas, and a pressurized gas charging hole is formed in a side surface of the pressurized gas chamber housing, and the hole is closed by a pin after the pressurized gas is charged.

Since the pressurized gas charging hole is formed and closed by the pin in this manner, another members can be connected to both end sides of the pressurized gas chamber housing.

Preferably in the present example (III-1) and the like, the pin is protruding into the pressurized gas chamber housing and a protruding portion thereof has such a length that combustion gas flow of the gas generating agent strikes against the protruding portion. By taking such an aspect, it is possible to make combustion residue strike against and adhere to the pin, so that the combustion chamber can be arrested.

Preferably in the present example (III-1) and the like, the inflator has a pressurized gas chamber in which an outer shell is formed by a cylindrical pressurized gas chamber housing and is charged with pressurized gas, a gas generator in which an outer shell is formed by a gas generator housing and the ignition means and the gas generating agent are accommodated, and a diffuser portion, wherein

the gas generator housing is connected to one end of the pressurized gas chamber housing and the diffuser portion is connected to the other end of the pressurized gas housing, and

a first rupturable plate closes between the pressurized gas chamber and the gas generator and a second rupturable plate closes between the pressurized gas chamber and the diffuser portion.

Preferably in the present example (III-1) and the like, a cap having a gas ejecting hole provided on at least one of a side surface and an end surface thereof, particularly on the side surface covers the first rupturable plate from the pressurized gas chamber side. By disposing such a cap, a arresting effect for the combustion residue is enhanced.

Preferably in the present example (III-1) and the like, the gas generator housing and the pressurized gas chamber housing, and the diffuser portion and the pressurized gas chamber housing are connected by resistance-welding.

Preferably in the present example (III-1) and the like, outer diameters of the pressurized gas chamber housing, the gas generator housing and the diffuser portion are equal or approximate to one another.

Stil another example, which does not form part of the invention but which is useful for a better comprehension of the invention, relates to an inflator (III-15) which has a pressurized gas chamber in which an outer shell is formed by a cylindrical pressurized gas chamber housing and is charged with pressurized gas, a gas generator in which an outer shell is formed by a gas generator housing and the ignition means and the gas generating agent are accommodated, and a diffuser portion, wherein

the gas generator housing is connected to one end of the pressurized gas chamber housing and the diffuser portion is connected to the other end of the pressurized gas housing, and

a first rupturable plate closes between the pressurized gas chamber and the gas generator and a second rupturable plate closes between the pressurized gas chamber and the diffuser portion, and outer diameters of the pressurized gas chamber housing, the gas generator housing and the diffuser portion are equal or approximate to one another.

This is an inflator in which an air bag is inflated by using pressurized gas, the pressurized gas is charged in a pressurized gas chamber having a outer shell formed by a cylindrical pressurized gas chamber housing, wherein the pressurized gas chamber housing is symmetrical regarding the axial and a radial directions, and both ends thereof are reduced in diameter.

That "both ends side are reduced in diameter" means that diameters at both ends of the pressurized gas chamber housing are made smaller than diameters of the other portion thereof.

By making the pressurized gas housing symmetrical, an orientation does not have to be determined at a time of assembling, so that manufacturing is improved. Further, when both ends are reduced in diameter, joining to another member can be facilitated, in particular, manufacturing in case of joining with resistance-welding is improved.

Preferably in the present example (III-15), an inflator uses combustion gas obtained by combustion of a gas generating agent together with pressurized gas as a inflating means for an air bag, wherein the inflator has a pressurized gas chamber in which an outer shell is formed by a cylindrical pressurized gas chamber housing and is charged with pressurized gas, a gas generator for generating a combustion gas and a diffuser portion having a gas discharging port, and the pressurized gas chamber housing is symmetrical regarding the axial and radial directions and both end sides thereof are reduced in diameter.

Preferably in the above-described example, a gas generator in which an outer shell is formed by a gas generator housing and the ignition means and the gas generating agent are accommodated, the gas generator housing is connected to one end of the pressurized gas chamber housing and the diffuser portion is connected to the other end of the pressurized gas housing, and a first rupturable plate closes between the pressurized gas chamber and the gas generator and a second rupturable plate closes between the pressurized gas chamber and the diffuser portion.

In this example, combustion gas generated inside the gas generator flows in the pressurized gas chamber after the first rupturable plate is broken, and thereafter the combustion gas is discharged from the gas discharging hole of the diffuser portion together with the pressurized gas after the second rupturable plate is broken, thereby inflating an air bag.

Preferably in the above-described example, one or both of a set of the gas generator housing and the pressurized gas chamber housing, and a set of the diffuser portion and the pressurized gas chamber housing are connected by resistance-welding.

Preferably in the present example (III-15), an inflator substantially uses only pressurized gas as an inflating means for an air bag, and the inflator comprises a pressurized gas chamber in which an outer shell is formed by a cylindrical pressurized gas chamber housing and pressurized gas is charged, and a diffuser portion which is connected to the pressurized gas chamber and has a gas discharging hole, a rupturable plate closing between the pressurized gas chamber and the diffuser portion, and an igniter accommodated inside the diffuser portion as a rupturable means of the rupturable plate, the pressurized gas chamber housing is symmetrical regarding the axial and radial directions and both ends thereof are reduced in diameter.

In this example, the rupturable plate is broken by actuation of the igniter (an electrical type igniter provided with a priming) and the pressurized gas is discharged from the gas discharging hole of the diffuser portion, thereby inflating the air bag. Combustion gas of the priming is slightly generated by actuation of the igniter, but this combustion gas itself does not substantially participate in inflation of the air bag, so that the inflating means for the air bag is substantially only the pressurized gas.

Preferably in the above-described example, a cylindrical gas discharging port connected to the gas discharging hole of the diffuser portion is provided, the gas discharging port is mounted to coincide with the axial direction of the pressurized gas chamber housing, and the pressurized gas discharged from the gas discharging hole passes through the gas discharging port and is discharged from an opening provided in the gas discharging port to inflate the air bag.

By providing such a gas discharging port, the axial direction of the pressurized gas chamber housing and the discharging direction of the pressurized gas coincide with each other, and the axial direction of the pressurized gas chamber housing and an inflating direction of the air bag coincide with each other, so that mounting an air bag is facilitated.

Preferably in the above-described example, the diffuser portion and the pressurized gas chamber housing are connected by resistance-welding.

Still another example, which does not form part of the invention but which is useful for a better comprehension of the invention, relates to (III-22) an air bag system comprising an activation-signal outputting means comprising an impact sensor and a control unit, and a module case in which any one of the above-described inflators and an air bag are accommodated.

The present example (III-22) is an inflator in which an air bag is inflated by using pressurized gas, the pressurized gas is charged in a pressurized gas chamber having an outer shell formed by a cylindrical pressurized gas chamber housing, the pressurized gas chamber housing is symmetrical regarding the axial and radial directions and both ends thereof are reduced in diameter, only the pressurized gas is substantially used as an inflating means for an air bag, wherein the inflator comprises a pressurized gas chamber having an outer shell formed by a cylindrical pressurized gas chamber housing, and a pressurized gas charged inside the pressurize gas chamber, a diffuser portion connected to the pressurized gas chamber and having a gas discharging hole, a rupturable plate closing the pressurized gas chamber and the diffuser portion, and an igniter accommodated inside the diffuser portion as a rupturing means for the rupturable plate, the pressurized gas chamber housing is symmetrical regarding the axial and radial directions, and both ends thereof are reduced in diameter,

a cylindrical gas discharging port connected to the gas discharging hole of the diffuser portion is provided, the gas discharging port is mounted to coincide with the axial direction of the pressurized gas chamber housing, and pressurized gas discharged from the gas discharging hole passes through the gas discharging port and is discharged from an opening provided in the gas discharging port to inflate an air bag, and

the diffuser portion and the pressurized gas chamber housing are connected by resistance-welding.

It is preferable that the gas generating agent used in this example is non-azide gas generating agents, and the gas generating agent can be decided in relation to composition of the pressurized gas as follows.

As the gas generating agent, for example, it is possible to use a material including fuel and oxidizing agent, or fuel, oxidizing agent and slag-forming agent, being mixed with binder if required, and formed into a desired shape. If such a gas generating agent is used, a gas generated by combustion of the agent can be used for inflating and developing an air bag together with the pressurized medium. Especially, when the gas generating agent including the slag-forming agent is used, slag is easily made, so that an amount of mist-like combustion residues discharged from the inflator can be largely reduced. However, in case of reducing a charged amount of gas generating agent and generated residues, it is unnecessary to use a slag-forming agent.

An example of the fuel can be one or at least two selected from the group consisting of triazine derivatives, tetrazole derivatives, triazole derivatives, guanidine derivatives, azodicarbonamide derivatives, and hydrazine derivatives are preferably used.

As triazine derivatives, one or at least two selected from the group consisting of triazine (1, 2, 3-triazine, 1, 2, 4-triazine, 1, 3, 5-triazine), melamine, trihydrazinotriazine, trimethylol melamine, alkylated methylol melamine, cyanuric acid derivatives such as ammeline, ammelide, ammeland, cyanuric acid or cyanurate esters, a nitric acid salt of melam, melem or melamine, a perchloric acid salt of melamine and nitro-melamine compound such as dinitroameline.

An example of tetrazole derivatives, triazole derivates, azodicarbonamide derivates and hydrazine derivates can be one or at least two selected from the group consisting of 5-oxo-1, 2, 4-triazole, tetrazole, 5-aminotetrazole, 5, 5'-bi-1H-tetrazole, biuret, azodicarbonamide, carbohydrazide, carbohydrazide nitrate complex, dihydrazide oxalate and hydrazine-nitrate complex.

An example of guanidine derivatives can be one or at least two selected from the group consisting of nitroguanidine (NQ), guanidine nitrate (GN), guanidine carbonate, aminonitroguanidine, aminoguanidine nitrate, aminoguanidine carbonate, diaminoguanidine nitrate, diaminoguanidine carbonate, triaminoguanidine nitrate and the like.

As the oxidizing agent, one or at least two selected from the group consisting of strontium nitrate, potassium nitrate, ammonium nitrate, potassium perchlorate, copper oxide, ferrous oxide, a basic copper nitrate are preferably used.

As the slag-forming agent, one or at least two selected from the group consisting of acid clay, talc, bentonite, diatomaceous earth, kaolin, silica, alumina, sodium silicate, silicone nitride, silicon carbide, hydrotalsite, and a mixture thereof are preferably used.

As the bonding agent, one or at least two selected from the group consisting of sodium salt of carboxymethylcellulose, hydroxyethyl cellulose, starch, polyvinyl alcohol, guar gum, microcrystal cellulose, polyacrylamide and calcium stearate are preferably used.

The gas generating agent used in the present invention can include 20 to 60 mass% of nitroguanidine as the fuel and 80 to 40 mass% of the oxidizing agent, and preferably, 30 to 40 mass% of nitroguanidine as the fuel and 70 to 60 mass% of strontium nitrate as the oxidizing agent. Further, the bonding agent (sodium carboxymethylcellulose or the like) and the slag-forming agent (acid clay or the like) can further be mixed in addition to the fuel and the oxidizing agent. In this case, it is preferable that the fuel is 20 to 60 mass%, the oxidizing agent is 40 to 65 mass%, the bonding agent is 3 to 12 mass% (preferably 4 to 12 mass%), and the slag-forming agent is 1 to 20 mass% (preferably 3 to 7 mass%).

According to the inflator of the present invention, the inflator can be compact while securing a charged amount of pressurized gas approximately equal to that in the conventional inflator. Also in that case, an internal pressure of the inflator can be controlled appropriately at a time of actuation, so that an inflating performance of an air bag can be maintained in an optimal state.

Brief Description of the Drawings

Fig. 1 is a sectional view of an inflator in the axial direction.
Fig. 2 is a sectional view of an inflator in the axial direction.
Fig. 3 is a sectional view of an inflator in the axial direction.
Fig. 4 is a perspective view and a plan view of a cap used in an inflator.
Fig. 5 is a perspective view and a plan view of a cap used in an inflator.
Fig. 6 is a perspective view of a cap used in an inflator.
Fig. 7 is a sectional view of an inflator in the axial direction.
Fig. 8 is a sectional view of an inflator in the axial direction.
Fig. 9 is a sectional view of an inflator in the axial direction.
Fig. 10 is a sectional view of an inflator in the axial direction.
Fig. 11 is a sectional view of an inflator in the axial direction.
Fig. 12 is a sectional view of an inflator in the axial direction.
Fig. 13 is a sectional view of an inflator in the axial direction.
Fig. 14 is a sectional view of an inflator in the axial direction.
Fig. 15 is a sectional view of an inflator in the axial direction.
Fig. 16 is a sectional view of an inflator in the axial direction.
Fig. 17 is a sectional view of an inflator in the axial direction.
Fig. 18 is a sectional view of an inflator in the axial direction.
Fig. 19 is a sectional view of an inflator in the axial direction.
Fig. 20 is a sectional view of an inflator in the axial direction.
Fig. 21 is a sectional view of an inflator in the axial direction.
Fig. 22 is a tank curve obtained in a 60-liters tank combustion test conducted in Example 1.

Reference numerals in the drawings will be explained.

10 inflator
20 pressurized medium chamber or a pressurized gas chamber
22 pressurized medium chamber housing or a pressurized gas chamber houisng
30 gas generator
32 gas generator housing
35 crimped portion
34 igniter
36 gas generating agent
40 first rupturable plate
42 gas ejecting hole
44 cap
48 crimped portion
50 diffuser portion
51 closed end surface
52 gas discharging hole
58 second rupturable plate

Embodiment of Invention (I)

Embodiment 1

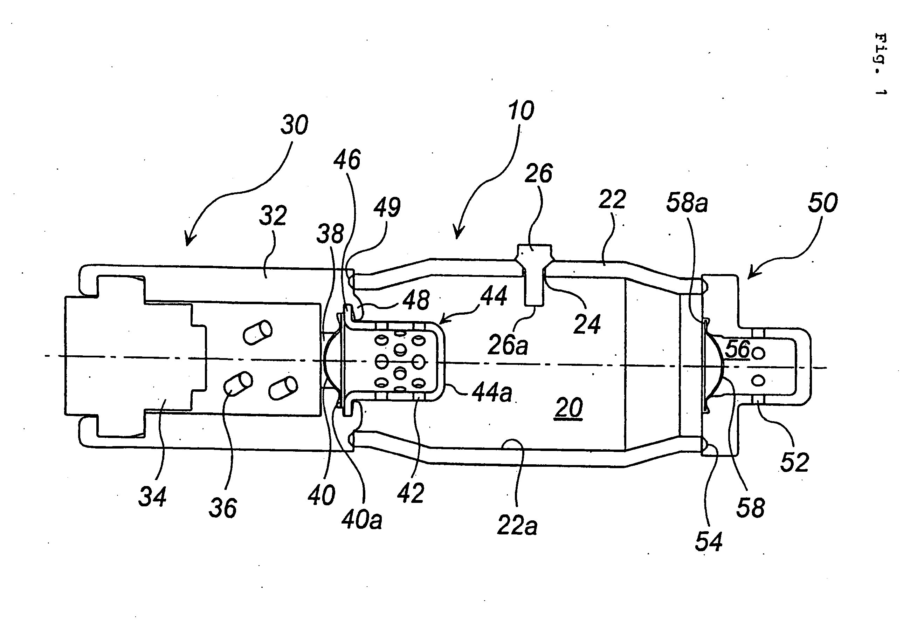

One embodiment will be explained with reference to Fig. 1. Fig. 1 is a sectional view of an inflator in the axial direction thereof.
An inflator 10 comprises a pressurized medium chamber 20, a gas generator 30 and a diffuser portion 50.
The pressurized medium chamber 20 has an outer shell formed by a cylindrical pressurized medium chamber housing 22 and it is charged with a pressurized medium comprising a mixture of argon and helium. Since the pressurized medium chamber housing 22 is made symmetrical in the axial direction and a radial direction thereof, it is unnecessary to adjust the orientation in the axial and radial directions at a time of assembling.
A charging hole 24 of a pressurized medium is formed on a side surface of the pressurized medium chamber housing 22, and it is closed by a pin 26 after the pressurized medium is charged. A distal end portion 26a of the pin 26 protrudes into the pressurized medium chamber 20, and the protruding portion thereof has such a length that combustion gas flow of a gas generating agent strikes against the protruding portion. By adjusting the length of the protruding portion of the pin 26, combustion gas can strike against the pin 26 to have combustion residues adhered to the pin 26. In Fig.

1, the pin 26 can be extended until the distal end portion 26a thereof abuts against the opposite wall surface 22a.

The gas generator 30 includes an ignition means (an electrical type igniter) 34 and a gas generating agent 36 accommodated in a gas generator housing 32, and it is connected to one end of the pressurized medium chamber 20. The gas generator housing 32 and the pressurized medium chamber housing 22 are connected at a connecting portion 49 by resistance-welding. When the inflator 10 is assembled in an air bag system, the ignition means 34 is connected to an external power source via a connector and a lead wire.

The gas generating agent 36 can comprises, for example, 34 mass% of nitroguanidine as a fuel, 56 mass% of strontium nitrate as an oxidizing agent, and 10 mass% of sodium carboxymethylcellulose as a bonding agent (a discharged gas temperature: 700 to 1630°C). A combustion residue generated when the gas generating agent 36 of the above composition is burnt is strontium oxide (melting point: 2430°C). For this reason, the combustion residue is solidified to be massive (slag-like) without being melted.

A first communication hole 38 between the pressurized medium chamber 20 and the gas generator 30 is closed by a first rupturable plate 40 transformed into a bowl-like shape due to a pressure of the pressurized medium, and the interior of the gas generator 30 is maintained in the normal pressure. The first rupturable plate 40 is resistance-welded to the gas generator housing 32 at a peripheral edge portion 40a.

A cap 44 having gas ejecting holes 42 is covered over the first rupturable plate 40 from the pressurized medium chamber 20 side. The cap 44 is attached to cover the first rupturable plate 40, so that combustion gas generated by combustion of the gas generating agent 36 is always ejected from the gas ejecting holes 42 via the cap 44.

The cap 44 has a flange portion 46 formed by folding an opening peripheral edge portion outwardly, and it is fixed by crimping a portion (a crimping portion) 48 of the gas generator housing 32 at the flange portion 46.

A diffuser portion 50 having gas discharging holes 52 for discharging the pressurized medium and the combustion gas is connected to the other end side of the pressurized medium chamber 20, and the diffuser portion 50 and the pressurized medium chamber housing 22 is resistance-welded to each other at a connecting portion 54. A filter made of wire mesh can be disposed inside the diffuser portion 50 in order to arrest the combustion residue, if required.

A second communication hole 56 between the pressurized medium chamber 20 and the diffuser portion 50 is closed by a second rupturable plate 58 transformed into a bowl-like shape due to pressure of the pressurized medium, and the interior of the diffuser portion 50 is maintained in the normal pressure. The second rupturable plate 58 is resistance-welded to the diffuser portion 50 at a peripheral edge portion 58a.

Next, an operation in case of the inflator 10 shown in Fig. 1 which is incorporated to an air bag system mounted to an automobile will be explained.

When an automobile receives the impact by a collision, the igniter 34 is actuated and ignited by the activation-signal outputting means to burn the gas generating agent 36, thereby generating a high temperature combustion gas. At this time, since the melting point of a combustion residue generated by combustion of the gas generating agent 36 is equal to or more than a discharging temperature of a gas generated from the gas generating agent 36, the combustion residue can hardly melt, being maintained solid.

Thereafter, the first rupturable plate 40 is broken by a pressure rise inside the gas generator 30 due to the high temperature combustion gas, and combustion gas including a combustion residue flows into the cap 44 to be ejected from the gas ejecting holes 42. At this time, since a temperature difference between the pressurized medium and the combustion gas in the pressurized medium chamber 20 is large, the combustion gas is cooled rapidly, so that the high temperature combustion residue is cooled and solidified and a combustion residue also adheres to an inner wall surface of an end surface 44a of the cap 44. Further, since the combustion gas ejected strikes against an inner wall 22a of the pressurized medium chamber housing 22, the combustion residue adheres to an inner wall surface and it can be hardly discharged out of the inflator 10. Incidentally, part of the remaining combustion residue adheres to the pin 26, too.

Thereafter, since the second rupturable plate 58 is broken by a pressure rise inside the pressurized medium chamber 20, the pressurized medium and the combustion gas are discharged from the gas discharging holes 52 via the second communication hole 56 to inflate an air bag.

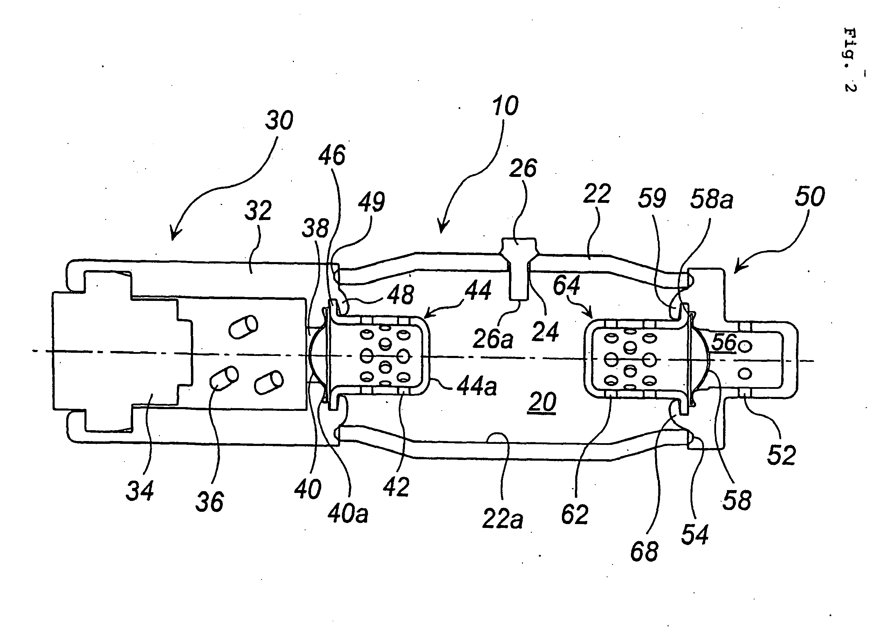

In such a course of the operation, since the inflator 10 exhibits the above-described actions and effects (1) to (3), the combustion residue discharged into the air bag is largely suppressed by these mutual effects. In an actual measurement, in case of the inflator of the structure shown in Fig. 1 in which the cap 44 is not provided, the combustion residue discharged outside the inflator 10 was 700 mg, but it could be reduced to 200 mg with the structure shown in Fig. 1. Further, as shown in Fig. 2, by providing a cap 64 in the second rupturable plate 58 side, the arresting performance of the combustion residue can be further increased. Reference numeral 62 denotes a gas ejecting hole, reference numeral 68 denotes a flange portion, and the cap 64 can be fixed to the diffuser portion 50 by the flange portion 68 and the crimping portion 59.

Embodiment 2

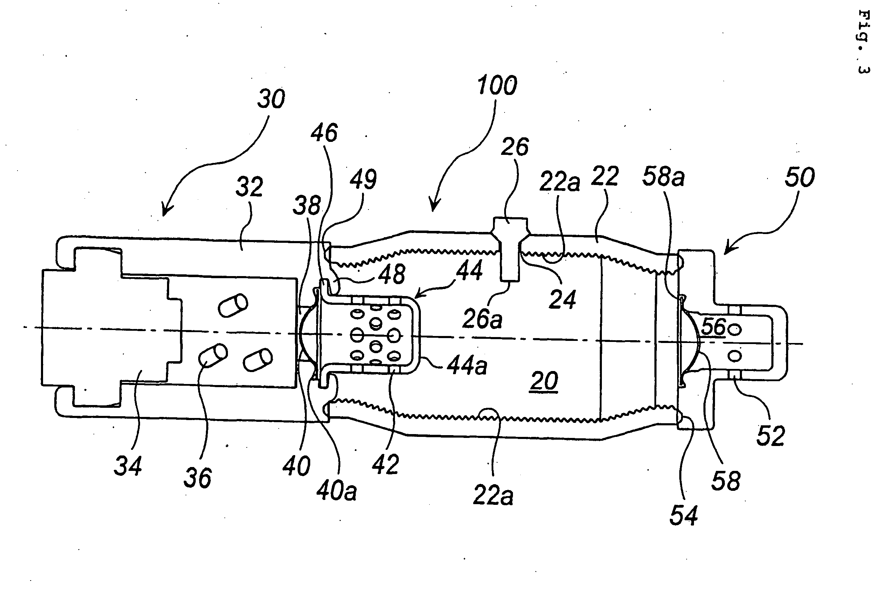

Another embodiment will be explained with reference to Fig. 3. Fig. 3 is a sectional view of an inflator in the axial direction thereof. An inflator 100 shown in Fig. 3 has almost the same structure as the inflator 10 shown in Fig. 1, and, in Fig 3, the same reference numerals as those in Fig. 1 denote the same parts. A difference in structure from Fig. 1 and a difference in advantageous effect due to the difference in structure will be explained below.

In the inflator 100 shown in Fig. 3, an inner wall surface 22a of a pressurized medium chamber housing 22 has a groove with a depth of 0.2 mm formed continuously or discontinuously in the circumferential direction. With this, a combustion residue in combustion gas is caught and captured in the groove, an advantageous effect (4) can be exhibited in addition to the advantageous effects (1) to (3). Further, as shown in Fig. 2, an aspect in which a cap 64 is provided can be employed.

Embodiment 3

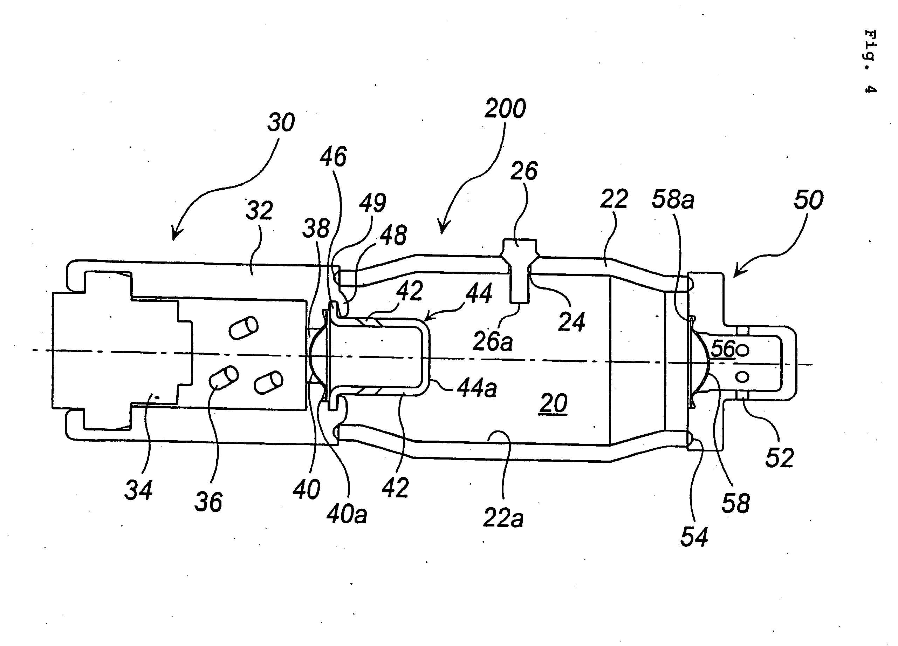

Another embodiment will be explained with reference to Fig. 4. Fig. 4 is a sectional view of an inflator in the axial direction thereof. An inflator 200 shown in Fig. 4 has almost the same structure as that of the inflator 10 shown in Fig. 1, and, in Fig. 4, the same reference numerals as those in Fig. 1 denote the same parts. A difference in structure from Fig. 1 and a difference in advantageous effect due to the difference in structure will be explained below.

In an inflator 200 shown in Fig. 4, gas ejecting holes 42 are provided on a side surface of a cap 44 and they are opened to eject combustion gas towards the gas generator 30. With this, combustion gas ejected from the gas ejecting holes 42 strikes against a crimped portion 48 and its vicinities before it strikes against the inner wall surface 22a of the pressurized medium chamber housing 22, and thereby, an advantageous effect (5) can be exhibited in addition to the advantageous effects (1) to (3). Incidentally, when the aspect shown in Fig. 3 is employed with respect to the inner wall surface 22a of the pressurized medium chamber housing 22, the advantageous effect (4) can be further exhibited. Also, as shown in Fig. 2, the aspect in which the cap 64 is provided can be employed, and the cap 44 of the other embodiment can be used instead of the cap 64.

Embodiment 4

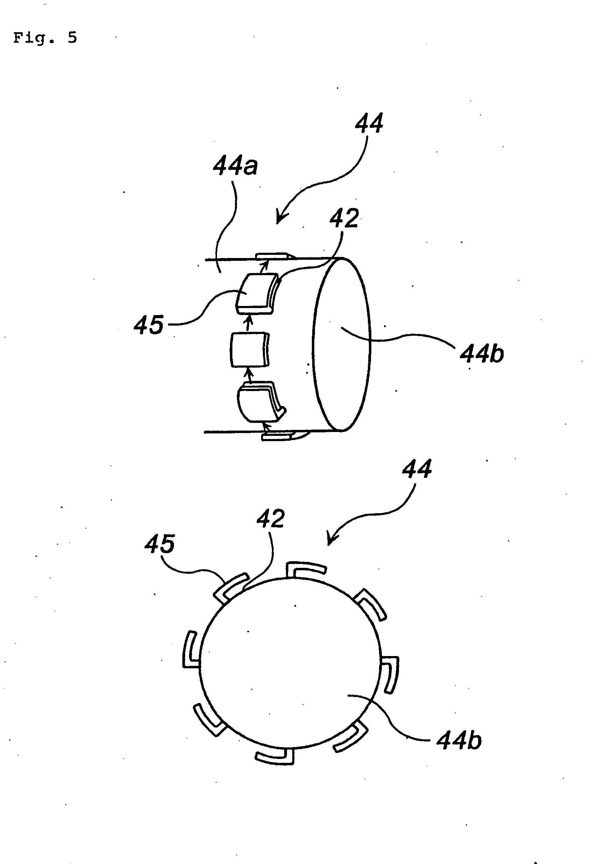

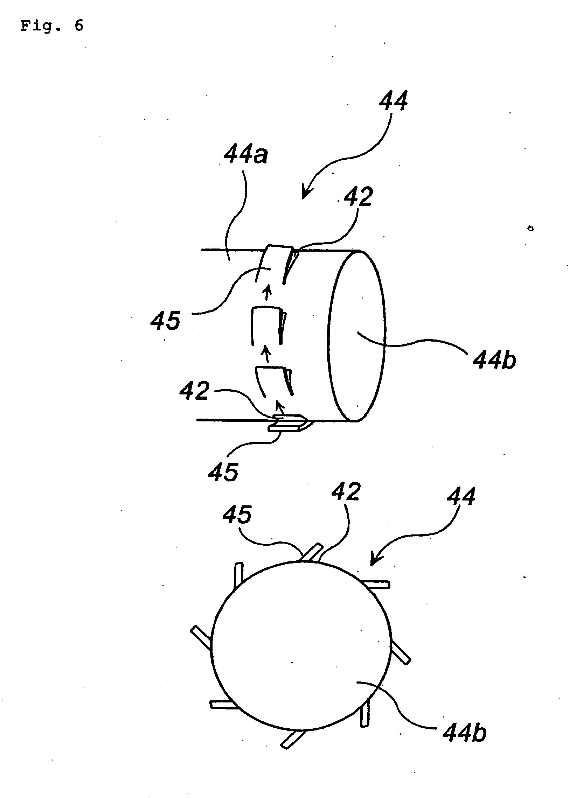

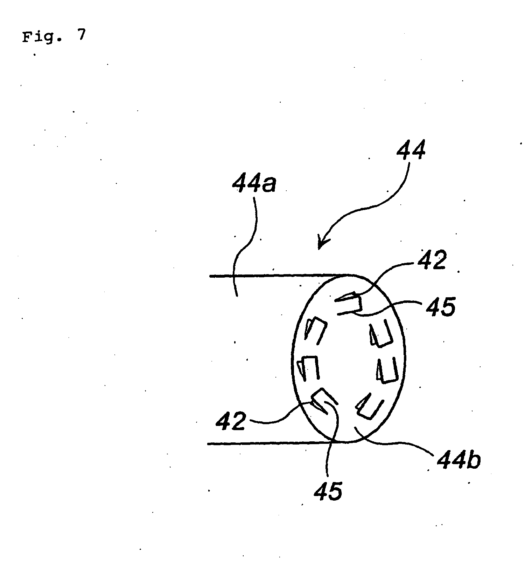

Another embodiment will be explained with reference to Fig. 5 to Fig. 7. Fig. 5 is a perspective view and a plan view of a cap of one embodiment, Fig. 6 is a perspective view and a plan view of a cap of another embodiment, and Fig. 7 is a perspective view of a cap of another embodiment. A cap 44 shown in Fig. 5 to Fig. 7 can be disposed into the inflators 10, 100 and 200 shown in Fig. 1, Fig. 3 and Fig. 4 respectively, and, in the inflator shown in Fig. 2, the cap 64 can be in the shapes shown in Fig. 5 to Fig. 7.

In the cap 44 shown in Fig. 5, gas ejecting holes 42 are provided on a side surface of the cap 44a, and a member (restricting member) 45 for circumferentially restricting an ejecting direction of combustion gas from the gas ejecting holes 42. The restricting member 45 is formed in a L-letter shape in plan view. Incidentally, the orientation of the restricting member 45 may be a different direction from that in Fig. 5.

Since such restricting members 45 are provided, combustion gas ejected from the gas ejecting hole 42 is ejected in the direction along the circumferential surface of the cap 44 to form an eddy, so that the advantageous effect (5) can be exhibited in addition to the advantageous effects (1) to (3). Incidentally, when the shape shown in Fig. 3 can be employed for the inner wall surface 22a of the pressurized medium chamber housing 22, the advantageous effect (4) can be further exhibited.

The cap 44 shown in Fig. 6 is provided with flat plate-shaped restricting members 45 instead of the L-letter-shaped restricting members 45 shown in Fig. 5, and the same advantageous effect as those in Fig. 5 can be obtained.

The cap 44 shown in Fig. 7 is provided on its end surface 44b with gas ejecting holes 42, and members (restricting members) 45 for circumferentially restricting an ejected direction of combustion gas from the gas ejecting holes 42. The restricting member 45 can be formed in the same shape as shown in Fig. 5 or Fig. 6. An inflator using the cap 44 shown in Fig. 7 can obtain the same advantageous effects as those in Fig. 5 and Fig. 6.

Embodiment 5

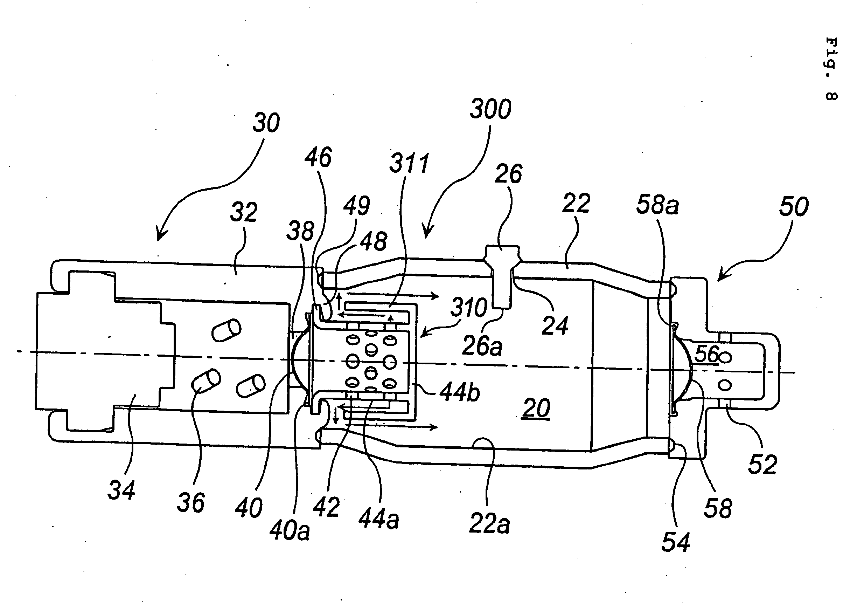

Another embodiment will be explained with reference to Fig. 8. Fig. 8 is a sectional view of an inflator in the axial direction. An inflator 300 shown in Fig. 8 has almost the same structure as that of the inflator 10 shown in Fig. 1, and, in Fig. 8, the same reference numerals as these in Fig. 1 denote the same parts. A difference in structure from Fig. 1 and a difference in advantageous effect due to the difference in structure will be explained below.

In the inflator 300 shown in Fig. 8, a cylindrical barrier member 310 is attached thereto. The barrier member 310 has a closed one end integrated with a end surface of the cap 44b and the other end opened, and it is formed such that a side wall 311 faces gas ejecting holes 42 provided on the side surface of the cap 44a with a distance. Also, as shown in Fig. 2, the aspect in which the cap 64 is provided can be employed, and further, the cap 44 of the other embodiment can be employed instead of the cap 64.

With such a barrier member 310, the combustion gas ejected from the gas ejecting holes 42 strikes against an inner wall of a side wall 311 of the barrier member, and then, it moves from the opening. Thereby, the advantageous effect (6) can be exhibited in addition to the advantageous effects (1) to (3). Incidentally, when the aspect shown in Fig. 3 is employed with respect to the inner wall surface 22a of the pressurized medium chamber housing 22, the advantageous effect (4) can be exhibited as well.

Embodiment 6

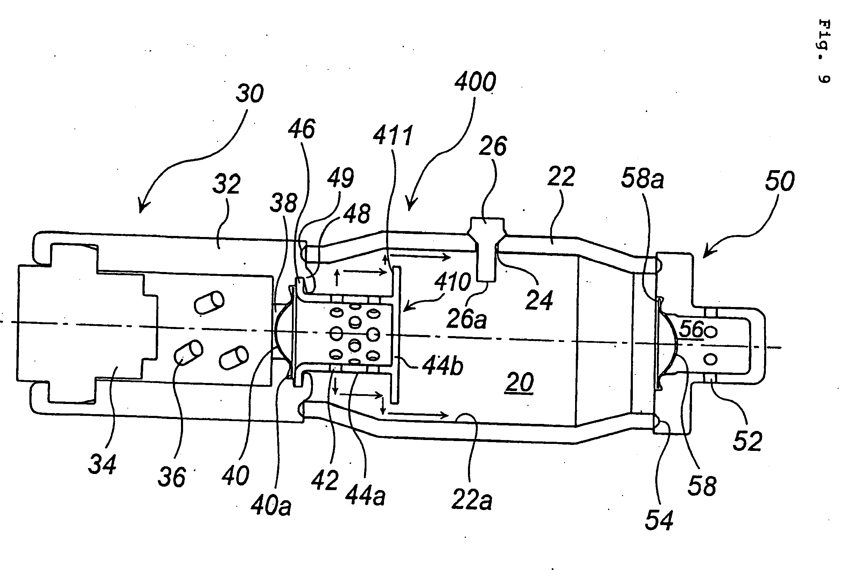

Another embodiment will be explained with reference to Fig. 9. Fig. 9 is a sectional view of an inflator in the axial direction. An inflator 400 shown in Fig. 9 has almost the same structure as that of the inflator 10 shown in Fig. 1, and, in Fig. 9, the same reference numerals as those in Fig. 1 denote the same parts. A difference in structure from Fig. 1 and a difference in advantageous effect due to the difference in structure will be explained below.

In the inflator 400 shown in Fig. 9, a disk-like barrier member 410 is attached. The barrier member 410 is integrated with a end surface of the cap 44b and it is extended from the end surface of the cap 44b towards an inner wall surface 22a of the pressurized medium chamber housing 22. Also, as shown in Fig. 2, the aspect in which the cap 64 is provided can be employed, and further, the cap 44 of another embodiment can be used instead of the cap 64.

With such a barrier member 410, combustion gas ejected from the gas ejecting holes 42 strikes against the barrier member 410, and then, it moves from a clearance between the inner wall surface 22a of the pressurized medium chamber housing 20 and an peripheral edge portion 411 of the barrier member. Thereby, the advantageous effect (6) can be exhibited in addition to the advantageous effects (1) to (3). Incidentally, when the aspect shown in Fig. 3 is employed with respect to the inner wall surface 22a of the pressurized medium chamber housing 22, the advantageous effect (4) can further be exhibited.

Embodiment 7

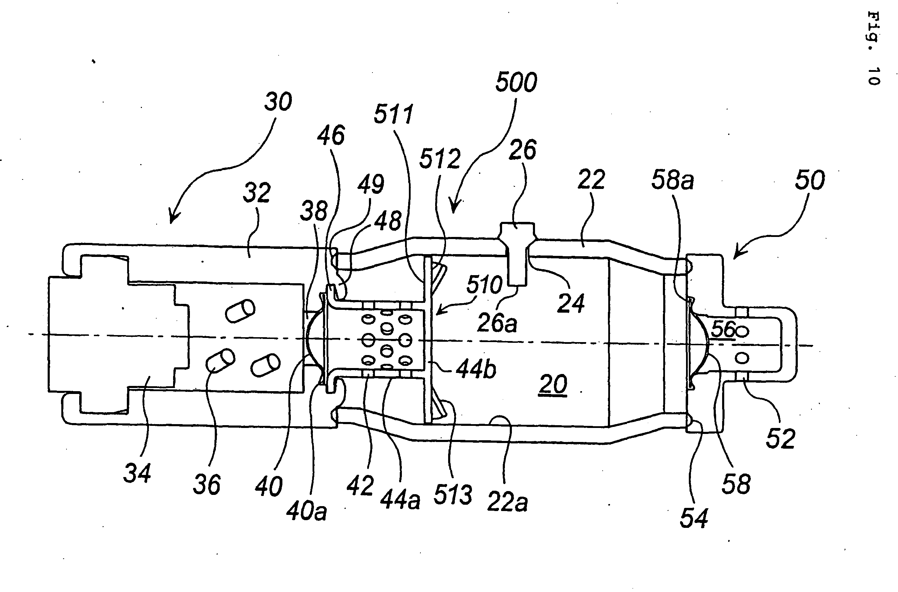

Another embodiment will be explained with reference to Fig. 10. Fig. 10 is a sectional view of an inflator in the axial direction. An inflator 500 shown in Fig. 10 has almost the same structure as that of the inflator 10 shown in Fig. 1, and, in Fig. 10, the same reference numerals as those in Fig. 1 denote the same parts. A difference in structure in Fig. 1 and a difference in advantageous effect due to the difference in structure will be explained below.

In the inflator 500 shown in Fig. 10, a disk-like barrier member 510 is attached. The barrier member 510 is integrated with an end surface of the cap 44b, and it is extended from the end surface of the cap 44b towards the inner wall surface 22a of the pressurized medium chamber housing 20 so that a peripheral edge portion 511 abuts on the inner wall surface 22a. Gas passing ports 512 and restricting means 513 having similar shapes like those in Fig. 6 are provided in the peripheral edge portion 511. Also, as shown in Fig. 2, the aspect in which the cap 64 is provided can be employed and further, the cap 44 of another embodiment can be used instead of the cap 64.

With such a barrier member 510, combustion gas ejected from the gas ejecting holes 42 strikes against the barrier member 510, and then, it moves through the gas passing ports 512 and the restricting means 513. Thereby, the advantageous effects (6) and (5) can be exhibited in addition to the advantageous effects (1) to (3) . Incidentally, when the aspect shown in Fig. 3 is employed with respect to the inner wall surface 22a of the pressurized medium chamber housing 22, the advantageous effect (4) can further be exhibited.

The inflator of the present invention can be applied to various inflators such as an air bag inflator for a driver side, an air bag inflator for a passenger side next to a driver, an air bag inflator for a side collision, an inflator for a curtain air bag, an inflator for a knee-bolster, an inflator for an inflatable seat belt, an inflator for a tubular system, an iflator for a pretensioner and the like.

Embodiments of Invention (II)

(1) Embodiment 1

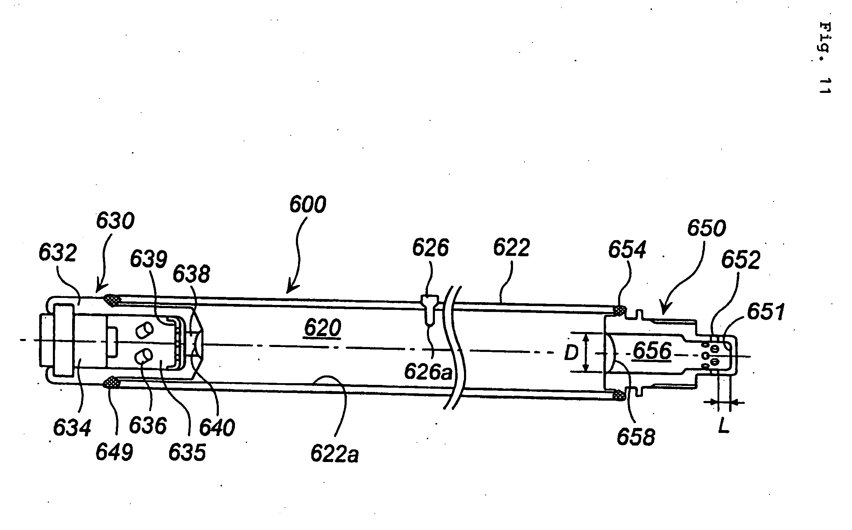

One embodiment will be explained with reference to Fig. 11. Fig. 1 is a sectional view of an inflator in the axial direction.

An inflator 600 comprises a pressurized gas chamber 620, a gas generator 630 and a diffuser portion 650.

The pressurized gas chamber 620 has an outer shell formed by a cylindrical pressurized gas chamber housing 622 and it is charged with pressurized gas comprising a mixture of argon and helium. Since the pressurized gas chamber housing 622 is made symmetrical in the axial direction and a radial direction thereof, it is unnecessary to adjust the orientation in the axial and radial directions at a time of assembling.

A charging hole 624 of pressurized gas is formed on a side surface of the pressurized gas chamber housing 622, and it is closed by a pin 626 after the pressurized gas is charged. A distal end portion 626a of the pin 626 protrudes into the pressurized gas chamber 620, and the protruding portion thereof has such a length that combustion gas flow of a gas generating agent strikes against the protruding portion. By adjusting the length of the protruding portion of the pin 626, combustion gas can strike against the pin 26 to have combustion residues adhered to the pin 626. In Fig. 11, the pin 626 can be extended until the distal end portion 626a thereof abuts against the opposite wall surface 622a.

The gas generator 630 has an ignition means (an electrical type igniter) 634 accommodated in a gas generator housing 632 and a gas generating chamber 635 accommodating a gas generating agent 636, and it is connected to one end of the pressurized gas chamber 620. A retainer 639 is disposed inside the gas generating chamber 635.

The gas generator housing 632 and the pressurized gas chamber housing 622 are connected at a connecting portion 649 by resistance-welding. When the inflator 600 is assembled in an air bag system, the ignition means 634 is connected to an external power source via a connector and a lead wire.

The gas generating agent 636 can comprises, for example, 34 mass% of nitroguanidine as a fuel, 56 mass% of strontium nitrate as an oxidizing agent, and 10 mass% of sodium carboxymethylcellulose as a bonding agent (a discharged gas temperature: 700 to 1630°C). A combustion residue generated when the gas generating agent 636 of the above composition is burnt is strontium oxide (melting point: 2430°C). For this reason, the combustion residue is solidified to be massive (slag-like) without being melted.

A first communication hole 638 between the pressurized gas chamber 620 and the gas generator 630 is closed by a first rupturable plate 640, and the interior of the gas generator 630 is maintained in the normal pressure. The first rupturable plate 640 is resistance-welded to the gas generator housing 632 at a peripheral edge portion.

A diffuser portion 650 having gas discharging ports 652 for discharging the pressurized gas and the combustion gas is connected to the other end side of the pressurized gas chamber 620, and the diffuser portion 650 and the pressurized gas chamber housing 622 are resistance-welded to each other at a connecting portion 654. The diffuser portion 650 and the gas generating chamber housing 622 are connected such that their central axes coincide with each other.

The diffuser portion 650 is a cap-shaped one having a plurality of gas discharging ports 652 through which a gas passes, wherein a distance L between a closed end surface 651 and an gas discharging port nearest to the closed end surface 651 and a diameter D of the rupturable plate 658 (except for a welded peripheral edge portion) satisfy the following formula: $L \geq D/2$.

The distance L is preferably 3 to 8 mm, more preferably 4 to 8 mm, and particularly preferably 5 to 8 mm. The diameter of a plurality of the gas discharging ports 652 is preferably 0.5 to 2 mm, and more preferably 0.5 to 1. 2 mm. The total opening area of a plurality of the gas discharging ports 652 is preferably 20 to 1000 $mm^2$, and more preferably 100 to 500 $mm^2$.

A second communication hole 656 between the pressurized gas chamber 620 and the diffuser portion 650 is closed by a second rupturable plate 658, and the interior of the diffuser portion 650 is maintained in the normal pressure. The second rupturable plate 658 is resistance-welded to the diffuser portion 650 at its peripheral edge portion.

Next, an operation in case of the inflator 600 shown in Fig. 11 which is incorporated to an air bag system mounted to an automobile will be explained.

When an automobile receives the impact by a collision, the igniter 634 is actuated and ignited by the activation-signal outputting means to burn the gas generating agent 636, thereby generating a high temperature combustion gas. At this time, since the melting point of a combustion residue generated by combustion of the gas generating agent 636 is equal to or more than a discharging temperature of a gas generated from the gas generating agent 636, the combustion residue can hardly melt, being maintained solid.

Thereafter, the first rupturable plate 640 is broken by a pressure rise inside the gas generator 630 due to the high temperature combustion gas, and combustion gas including a combustion residue flows into the pressurized gas chamber 620.

At this time, since a temperature difference between the pressurized gas and the combustion gas in the pressurized gas chamber 620 is large, the combustion gas is cooled rapidly, so that the high temperature combustion residue is cooled and solidified. And, since the combustion gas also strikes against an inner wall 622a of the pressurized gas chamber housing 622, the combustion residue adheres to an inner wall surface thereof and it can be hardly discharged out of the inflator 600. Incidentally, part of the remaining combustion residue adheres to the pin 626, too.

Thereafter, since the second rupturable plate 658 is broken by a pressure rise inside the pressurized gas chamber 620, the pressurized gas and the combustion gas are discharged from the gas discharging holes 652 via the second communication hole 656 to inflate an air bag.

At this time, since the combustion gas and the pressurized gas flow out from the gas discharging ports 652 after they once strikes against the closed end surface 651 of the diffuser portion 650 to change their flow directions, foreign materials can easily remain in a pocket portion from the closed end surface 651 to the gas discharging hole 652 nearest therefrom. And, since the above action is elevated by setting a depth (L) of the pocket portion to the maximum length (D/2) of the foreign material or more, the foreign material can remain more easily. Due to that the gas is discharged via the diffuser portion 650 in this manner, the foreign materials are removed.

In such a course of the operation, since the inflator 600 exhibits the above-described advantageous effects (IIa) to (IIc), (1) to (3), an amount of pieces of the broken rupturable plate or combustion residues discharged into the air bag is largely suppressed by these mutual effects.

(2) Embodiment 2

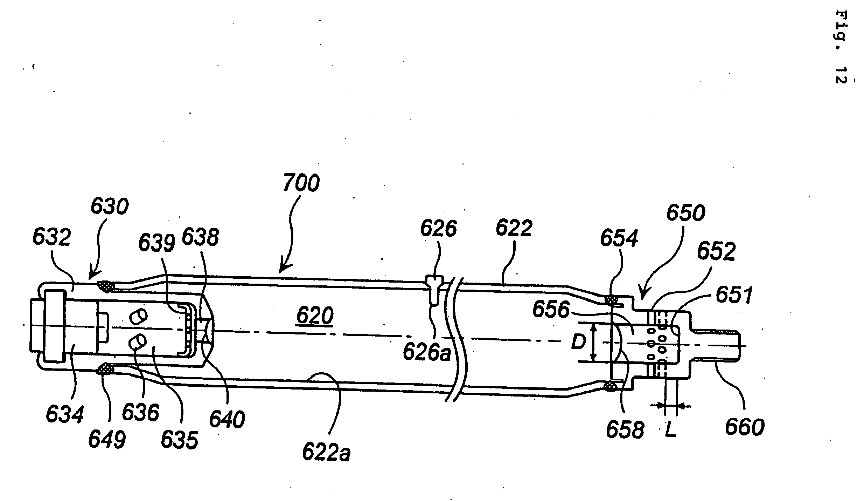

One embodiment will be explained with reference to Fig. 12. Fig. 12 is a sectional view of an inflator in the axial direction. Since the inflators shown in Fig. 12 and Fig. 11 are different from each other only in part of a structure of a diffuser portion, the same parts are attached with the same reference numerals and explanations thereof will be omitted.

An inflator 700 shown in Fig. 12 is provided at a distal end portion of a diffuser portion 650 with a stud bolt 660 used at the time of mounting the inflator to a module case.

The inflator 700 shown in Fig. 12 discharges a gas according to the same action as that of the inflator 600 shown in Fig. 11 and conducts the same operation.

(3) Embodiment 3

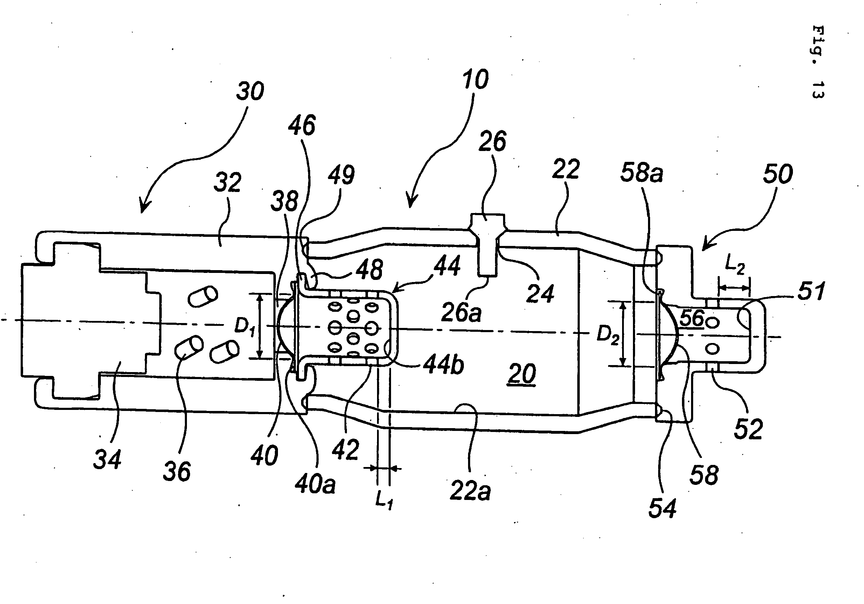

One embodiment will be explained with reference to Fig. 13. Fig. 13 is a sectional view of an inflator in the axial direction thereof.

An inflator 10 comprises a pressurized gas chamber 20, a gas generator 30 and a diffuser portion 50.

The pressurized gas chamber 20 has an outer shell formed by a cylindrical pressurized gas chamber housing 22 and it is charged with pressurized gas comprising a mixture of argon and helium. Since the pressurized gas chamber housing 22 is made symmetrical in the axial direction and a radial direction thereof, it is unnecessary to adjust the orientation in the axial and radial directions at a time of assembling.

A charging hole 24 of pressurized gas is formed on a side surface of the pressurized gas chamber housing 22, and it is closed by a pin 26 after the pressurized gas is charged. A distal end portion 26a of the pin 26 protrudes into the pressurized gas chamber 20, and the protruding portion thereof has such a length that combustion gas flow of a gas generating agent strikes against the protruding portion. By adjusting the length of the protruding portion of the pin 26, combustion gas can strike against the pin 26 to have combustion residues adhered to the pin 26. In Fig. 13, the pin 26 can be extended until the distal end portion 26a thereof abuts against the opposite wall surface 22a.

The gas generator 30 includes an ignition means (an electrical type igniter) 34 and a gas generating agent 36 accommodated in a gas generator housing 32, and it is connected to one end of the pressurized gas chamber 20. The gas generator housing 32 and the pressurized gas chamber housing 22 are connected at a connecting portion 49 by resistance-welding. When the inflator 10 is assembled in an air bag system, the ignition means 34 is connected to an external power source via a connector and a lead wire.

The gas generating agent 36 can comprises, for example, 34 mass% of nitroguanidine as a fuel, 56 mass% of strontium nitrate as an oxidizing agent, and 10 mass% of sodium carboxymethylcellulose as a bonding agent (a discharged gas temperature: 700 to 1630°C). A combustion residue generated when the gas generating agent 36 of the above composition is burnt is strontium oxide (melting point: 2430°C). For this reason, the combustion residue is solidified to be massive (slag-like) without being melted.

A first communication hole 38 between the pressurized gas chamber 20 and the gas generator 30 is closed by a first rupturable plate 40 in a bowl-like shape, and the interior of the gas generator 30 is maintained in the normal pressure. The first rupturable plate 40 is resistance-welded to the gas generator housing 32 at a peripheral edge portion 40a.

A cap 44 having gas ejecting holes 42 is covered over the first rupturable plate 40 from the pressurized gas chamber 20 side. The cap 44 is attached to cover the first rupturable plate 40, so that combustion gas generated by combustion of the gas generating agent 36 is always ejected from the gas ejecting holes 42 via the cap 44.

A distance L1 between a closed end surface 44b of the cap 44 and an gas ejecting hole 42 nearest to the closed end surface 44b and a diameter D1 of the rupturable plate 40 (except for a welded peripheral edge portion) satisfy the following formula: $L1 \geq D1/2$.

The distance L1 is preferably 3 to 8 mm, more preferably 4 to 8 mm, and particularly preferably 5 to 8 mm. The diameter of a plurality of the gas ejecting holes 42 is preferably 0.5 to 2 mm, and more preferably 0.5 to 1.2 mm. The total opening area of a plurality of the gas ejecting holes 42 is preferably 20 to 1000 $mm^2$, and more preferably 100 to 500 $mm^2$.

The cap 44 has a flange portion 46 formed by folding an opening peripheral edge portion outwardly, and it is fixed by crimping a portion (a crimping portion) 48 of the gas generator housing 32 at the flange portion 46.

A diffuser portion 50 having gas discharging holes 52 for discharging the pressurized gas and the combustion gas is connected to the other end side of the pressurized gas chamber 20, and the diffuser portion 50 and the pressurized gas chamber housing 22 is resistance-welded to each other at a connecting portion 54.

The diffuser portion 50 is a cap-shaped one having a plurality of gas discharging ports 52 through which a gas passes, wherein a distance L2 between a closed end surface 51 and an gas discharging port nearest to the closed end surface 51 and a diameter D2 of the rupturable plate 58 (except for a welded peripheral edge portion) satisfy the following formula: L2 ≥ D2/2.

The distance L2 is preferably 3 to 8 mm, more preferably 4 to 8 mm, and particularly preferably 5 to 8 mm. The diameter of a plurality of the gas discharging ports 52 is preferably 0.5 to 2 mm, and more preferably 0.5 to 1.2 mm. The total opening area of a plurality of the gas discharging ports 52 is preferably 20 to 1000 mm$^2$, and more preferably 100 to 500 mm$^2$.

A second communication hole 56 between the pressurized gas chamber 20 and the diffuser portion 50 is closed by a second rupturable plate 58, and the interior of the diffuser portion 50 is maintained in the normal pressure. The second rupturable plate 58 is resistance-welded to the diffuser portion 50 at a peripheral edge portion 58a.

Next, an operation in case of the inflator 10 shown in Fig. 13 which is incorporated to an air bag system mounted to an automobile will be explained.

When an automobile receives the impact by a collision, the igniter 34 is actuated and ignited by the activation-signal outputting means to burn the gas generating agent 36, thereby generating a high temperature combustion gas. At this time, since the melting point of a combustion residue generated by combustion of the gas generating agent 36 is equal to or more than a discharging temperature of a gas generated from the gas generating agent 36, the combustion residue can hardly melt, being maintained solid.

Thereafter, the first rupturable plate 40 is broken by a pressure rise inside the gas generator 30 due to the high temperature combustion gas, and combustion gas including a combustion residue flows into the cap 44 to be ejected from the gas ejecting holes 42.

At this time, the pressurized gas flows out from the gas ejecting holes 42 after the pressurized gas strikes against the closed end surface 44b of the cap 44 to change its flow direction, so that foreign materials can easily remain at a pocket portion from the closed end surface 44b to the gas ejecting hole 42 nearest to the closed end surface 44b. And, since the above-described action is enhanced by setting the depth (L1) of the pocket portion to the maximum length (D1/2) of the foreign material or more, the foreign materials can remain more easily in the pocket. As described above, the gas is discharged from the cap 44 to remove the foreign materials.

Further, since a temperature difference between the pressurized gas and the combustion gas in the pressurized gas chamber 20 is large, the combustion gas is cooled rapidly, so that the high temperature combustion residue is cooled and solidified and a combustion residue also adheres to the closed end surface 44b of the cap 44. Further, the ejected combustion gas strikes against an inner wall 22a of the pressurized gas chamber housing 22, so that the combustion residue adheres to an inner wall surface and it can be hardly discharged out of the inflator 10. Incidentally, part of the remaining combustion residue adheres to the pin 26, too.

Thereafter, the second rupturable plate 58 is broken by a pressure rise inside the pressurized gas chamber 20, and consequently, the pressurized gas and the combustion gas are discharged from the gas discharging holes 52 via the second communication hole 56 to inflate an air bag. At this time, since the relationship of L2 ≥ D2/2 is satisfied even in the diffuser portion 50, an action similar to that of the cap 44 can be conducted.

In such a course of action, the inflator 10 exhibits the above-described advantageous effects (IIa) to (IIc), (1) to (3), an amount of pieces of the rupturable plate or combustion residues discharged in the air bag is largely suppressed. In an actual measurement, when the cap 44 was not provided in the structure shown in Fig. 13 and the relationship of L2 ≥ D2/2 was not satisfied in the diffuser portion 50, combustion residues discharged outside the inflator 10 was 700 mg. However, it was reduced to 200 mg by employing the structure shown in Fig. 13.

(4) Embodiment 4

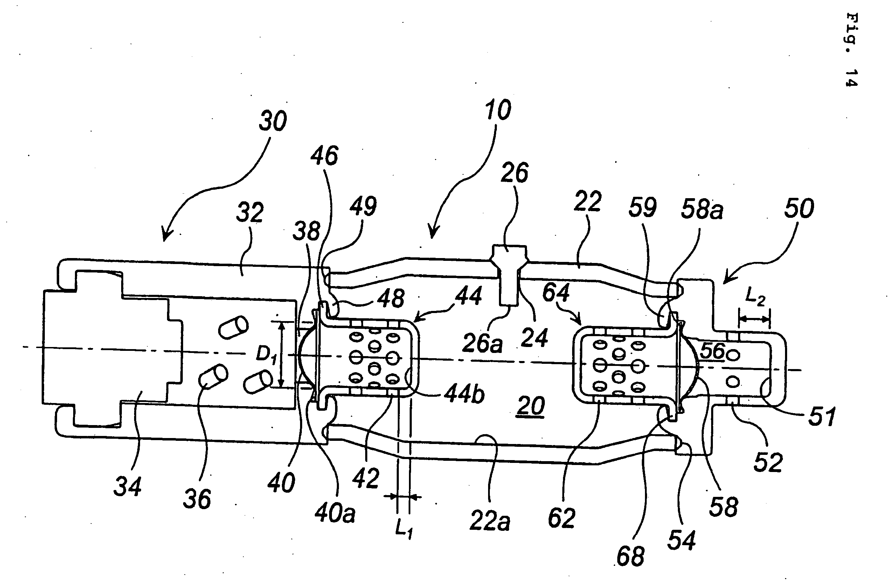

One embodiment will be explained with reference to Fig. 14. Fig. 14 is a sectional view of an inflator in the axial direction. Since the inflators shown in Fig. 14 and Fig. 13 have the same structure except that the inflator shown in Fig. 14 is further provided with a cap covering the second rupturable plate, so that the same elements are attached with the same reference numerals and explanations thereof will be omitted.

A cap 64 having a gas outflow holes 62 covers a second rupturable plate 58 from the pressurized gas chamber 20 side. The cap 64 is attached to cover the second rupturable plate 58 so that combustion gas generated by combustion of a gas generating agent 36 always passes the cap 64 and flows into a diffuser portion 50 from the gas outflow holes 62. Reference numeral 62 denotes the gas outflow hole, reference numeral 68 denotes a flange portion, and the cap 64 is fixed to the diffuser portion 50 by the flange portion 68 and crimping portion 59. The diameter of and the total opening area of a plurality of the gas outflow holes 62 can be made equal to those in the gas ejecting holes 42.

In the inflator 10 shown in Fig. 14, the cap 44 and the diffuser portion 50 satisfy the relation of L1 ≥ D1/2 and the relation of L2 ≥ D2/2 like the inflator 10 shown in Fig. 13 and the cap 64 is further provided, so that the advantageous effects (IIa) to (IIc) are further enhanced.

(5) Embodiment 5

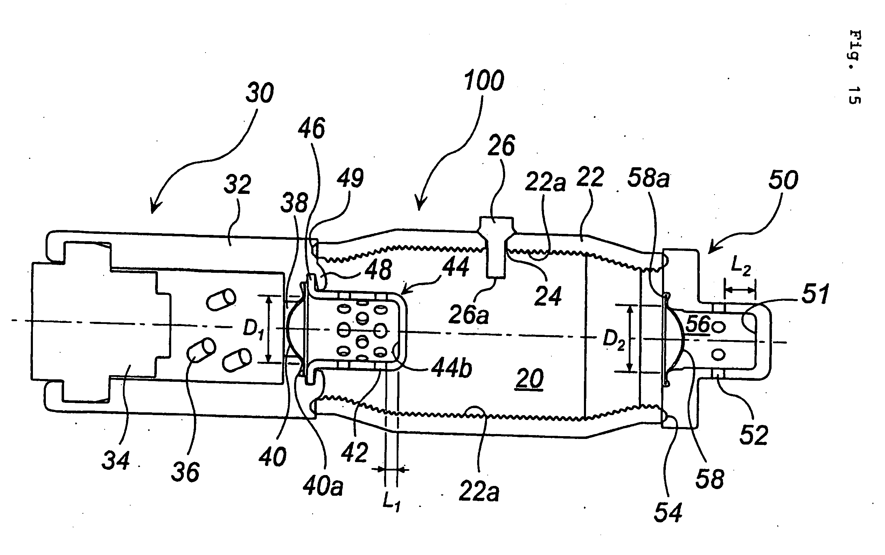

Another embodiment will be explained with reference to Fig. 15. Fig. 15 is a sectional view of an inflator in the axial direction. An inflator 100 shown in Fig. 15 has almost the same structure as that of the inflator 10 shown in Fig. 13, and the same reference numerals as those in Fig. 13 denote the same parts in Fig. 15. A difference in structure from Fig. 13 and an advantageous effect due to the difference in structure will be explained below.

In the inflator 100 shown in Fig. 15, an inner wall surface 22a of a pressurized gas chamber housing 22 has a groove with a depth of 0.2 mm formed continuously or discontinuously in the circumferential direction. For this reason, combustion residues in combustion gas is arrested in the groove, and thereby, an advantageous effect (4) can be exhibited in addition to the advantageous effects (1) to (3). Further, as shown in Fig. 14, an aspect in which a cap 64 is provided can be employed.

Further, the cap 44 and the diffuser portion 50 satisfy the relation of $L1 \geq D1/2$ and the relation of $L2 \geq D2/2$ like the inflator 10 shown in Fig. 13, the advantageous effects (IIa) to (IIc) can be obtained.

(6) Embodiment 6

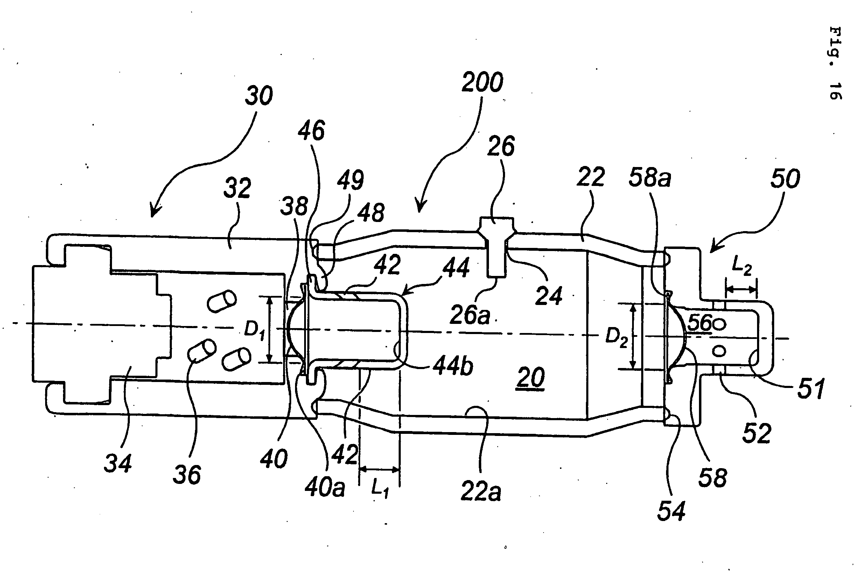

Another embodiment will be explained with reference to Fig. 16. Fig. 16 is a sectional view of an inflator in the axial direction. An inflator 200 shown in Fig. 16 has almost the same structure as that of the inflator 10 shown in Fig. 13, and, in Fig. 16, the same reference numerals as those in Fig. 13 denote the same parts. A difference in structure from Fig. 13 and an advantageous effect due to the difference in structure will be explained below.

In the inflator 200 shown in Fig. 16, gas ejecting holes 42 are provided on a side surface of a cap 44 and they are opened to eject combustion gas towards the gas generator 30. For this reason, the combustion gas ejected from the gas ejecting holes 42 strikes against a crimped portion 48 and its vicinities before it strikes against the inner wall surface 22a of the pressurized gas chamber housing 22, and thereby, an advantageous effect (5) can be exhibited in addition to the advantageous effects (1) to (3). Incidentally, when the aspect shown in Fig. 15 is employed with respect to the inner wall surface 22a of the pressurized gas chamber housing 22, the advantageous effect (4) can be further exhibited. Also, as shown in Fig. 14, the aspect in which the cap 64 is provided can be employed, and the cap 44 of another embodiment can be used instead of the cap 64.

Further, since the cap 44 and the diffuser portion 50 satisfy the relation of $L1 \geq D1/2$ and the relation of $L2 \geq D2/2$ like the inflator 10 shown in Fig. 13, the advantageous effects (IIa) to (IIc) can be obtained.

(7) Embodiment 7

Another embodiment will be explained with reference to Fig. 5 to Fig. 7. Fig. 5 is a perspective view and a plan view of a cap of one embodiment, Fig. 6 is a perspective view and a plan view of a cap of another embodiment, and Fig. 7 is a perspective view of a cap of another embodiment. A cap 44 shown in Fig. 5 to Fig. 7 can be disposed into the inflators 600, 700, 10, 100 and 200 shown in Fig. 11 to Fig. 16 respectively.

In the cap 44 shown in Fig. 5, gas ejecting holes 42 are provided on a side surface of the cap 44a, and a member (restricting member) 45 for circumferentially restricting an ejecting direction of combustion gas from the gas ejecting holes 42. The restricting member 45 is formed in a L-letter shape in plan view. Incidentally, the orientation of the restricting member 45 may be a different direction from that in Fig. 5.

Since such restricting members 45 are provided, combustion gas ejected from the gas ejecting hole 42 is ejected in the direction along the circumferential surface of the cap 44 to form an eddy, so that the advantageous effect (5) can be exhibited in addition to the advantageous effects (1) to (3). Incidentally, when the shape shown in Fig. 15 can be employed for the inner wall surface 22a of the pressurized gas chamber housing 22, the advantageous effect (4) can be further exhibited.

The cap 44 shown in Fig. 6 is provided with flat plate-shaped restricting members 45 instead of the L-letter-shaped restricting members 45 shown in Fig. 5, and the same advantageous effect as those in Fig. 5 can be obtained.

The cap 44 shown in Fig. 7 is provided on its end surface 44b with gas ejecting holes 42, and members (restricting members) 45 for circumferentially restricting an ejected direction of combustion gas from the gas ejecting holes 42. The restricting member 45 can be formed in the same shape as shown in Fig. 5 or Fig. 6. An inflator using the cap 44 shown in Fig. 7 can obtain the same advantageous effects as those in Fig. 5 and Fig. 6.

By adjusting the caps 44 shown in Fig. 5 and Fig. 6 to satisfy the relation of $L1 \geq D1/2$, the advantageous effects (IIa) to (IIc) can be obtained like the inflator 10 shown in Fig. 13. In particular, when the caps 44 shown in Fig. 5 and Fig. 6 are used, pieces of the broken first rupturable plate 40 can hardly be discharged out through the gas ejecting holes 42 due to an action of the restricting members, and thereby an arresting effect is further improved.

(8) Embodiment 8

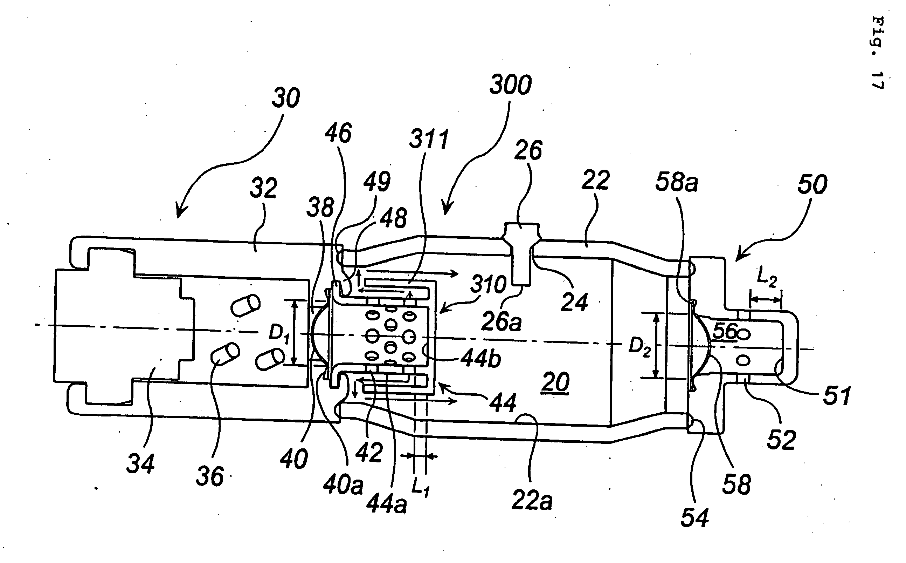

Another embodiment will be explained with reference to Fig. 17. Fig. 17 is a sectional view of an inflator in the axial direction. An inflator 300 shown in Fig. 17 has almost the same structure as that of the inflator 10 shown in Fig. 13, and, in Fig.17, the same reference numerals as these in Fig.13 denote the same parts. A difference in structure from Fig. 13 and a difference in advantageous effect due to the difference in structure will be explained below.

In the inflator 300 shown in Fig. 17, a cylindrical barrier member 310 is attached thereto. The barrier member 310 has a closed one end integrated with a end surface of the cap 44b and the other end opened, and it is formed such that a side wall 311 faces gas ejecting holes 42 provided on the side surface of the cap 44a with a distance. Also, as shown in Fig. 14, the aspect in which the cap 64 is provided can be employed, and further, the cap 44 of the other embodiment can be employed instead of the cap 64.

Since the cap 44 and the diffuser portion 50 satisfy the relation of L1 ≥ D1/2 and the relation of L2 ≥ D2/2 like the inflator 10 shown in Fig. 13, the advantageous effects (IIa) to (IIc) can be obtained.

Further, because of a barrier member 310 provided with the cap 44, the combustion gas ejected from the gas ejecting holes 42 strikes against an inner wall of a side wall 311 of the barrier member, and then, it moves from the opening. Thereby, the advantageous effect (6) can be exhibited in addition to the advantageous effects (1) to (3). Incidentally, when the aspect shown in Fig. 15 is employed with respect to the inner wall surface 22a of the pressurized gas chamber housing 22, the advantageous effect (4) can be exhibited as well.

(9) Embodiment 9

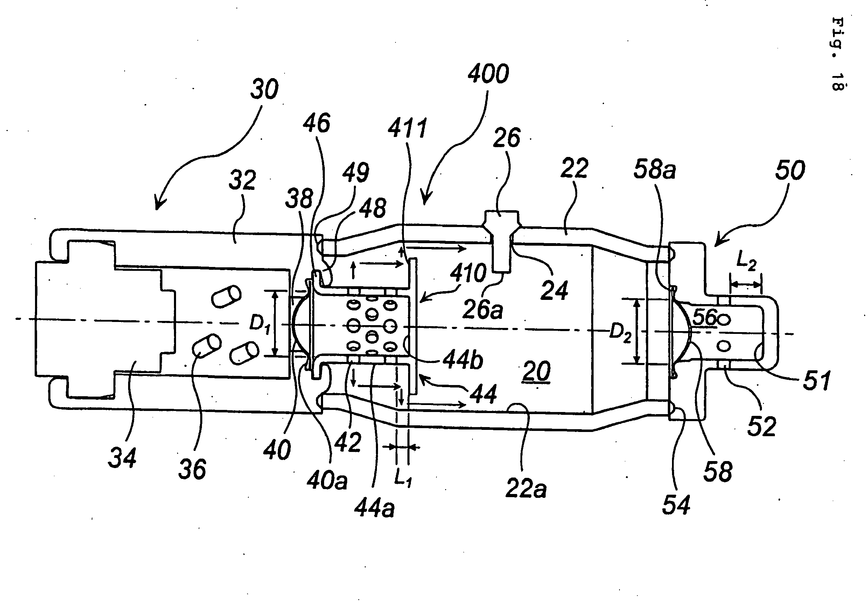

Another embodiment will be explained with reference to Fig. 18. Fig. 18 is a sectional view of an inflator in the axial direction. An inflator 400 shown in Fig. 18 has almost the same structure as that of the inflator 10 shown in Fig. 13, and, in Fig. 18, the same reference numerals as those in Fig. 13 denote the same parts. A difference in structure from Fig. 13 and a difference in advantageous effect due to the difference in structure will be explained below.

In the inflator 400 shown in Fig. 18, a disk-like barrier member 410 is attached. The barrier member 410 is integrated with a end surface of the cap 44b and it is extended from the end surface of the cap 44b towards an inner wall surface 22a of the pressurized gas chamber housing 22. Also, as shown in Fig. 14, the aspect in which the cap 64 is provided can be employed, and further, the cap 44 of another embodiment can be used instead of the cap 64.

Since the cap 44 and the diffuser portion 50 satisfy the relation of L1 ≥ D1/2 and the relation of L2 ≥ D2/2 like the inflator 10 shown in Fig. 13, the advantageous effects (IIa) to (IIc) can be obtained.

Further, because of a barrier member 410 attached to the cap 44, combustion gas ejected from the gas ejecting holes 42 strikes against the barrier member 410, and then, it moves from a clearance between the inner wall surface 22a of the pressurized gas chamber housing 20 and an peripheral edge portion 411 of the barrier member. Thereby, the advantageous effect (6) can be exhibited in addition to the advantageous effects (1) to (3). Incidentally, when the aspect shown in Fig. 15 is employed with respect to the inner wall surface 22a of the pressurized gas chamber housing 22, the advantageous effect (4) can further be exhibited.

(10) Embodiment 10

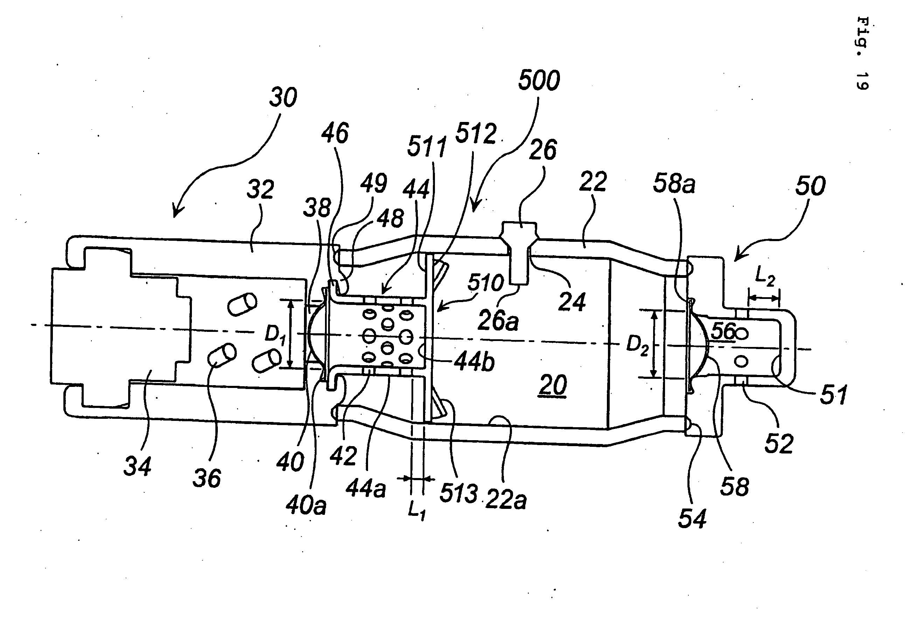

Another embodiment will be explained with reference to Fig. 19. Fig. 19 is a sectional view of an inflator in the axial direction. An inflator 500 shown in Fig. 19 has almost the same structure as that of the inflator 10 shown in Fig. 13, and, in Fig. 19, the same reference numerals as those in Fig. 13 denote the same parts. A difference in structure in Fig. 13 and a difference in advantageous effect due to the difference in structure will be explained below.

In the inflator 500 shown in Fig. 19, a disk-like barrier member 510 is attached. The barrier member 510 is integrated with an end surface of the cap 44b, and it is extended from the end surface of the cap 44b towards the inner wall surface 22a of the pressurized gas chamber housing 20 so that a peripheral edge portion 511 abuts on the inner wall surface 22a. Gas passing ports 512 and restricting means 513 having similar shapes like those in Fig. 7 are provided in the peripheral edge portion 511. Also, as shown in Fig. 14, the aspect in which the cap 64 is provided can be employed and further, the cap 44 of another embodiment can be used instead of the cap 64.

Since the cap 44 and the diffuser portion 50 satisfy the relation of L1 ≥ D1/2 and the relation of L2 ≥ D2/2 like the inflator 10 shown in Fig. 13, the advantageous effects (IIa) to (IIc) can be obtained.

Further, because of a barrier member 510 attached to the cap 44, combustion gas ejected from the gas ejecting holes 42 strikes against the barrier member 510, and then, it moves through the gas passing ports 512 and the restricting means 513. Thereby, the advantageous effects (6) and (5) can be exhibited in addition to the advantageous effects (1) to (3). Incidentally, when the aspect shown in Fig. 15 is employed with respect to the inner wall surface 22a of the pressurized gas chamber housing 22, the advantageous effect (4) can further be exhibited.

The inflator of the present invention can be applied to various inflators such as an air bag inflator for a driver side, an air bag inflator for a passenger side next to a driver, an air bag inflator for a side collision, an inflator for a curtain air bag, an inflator for a knee-bolster, an inflator for an inflatable seat belt, an inflator for a tubular system, an iflator for a pretensioner and the like.

Embodiments of the Invention (III)

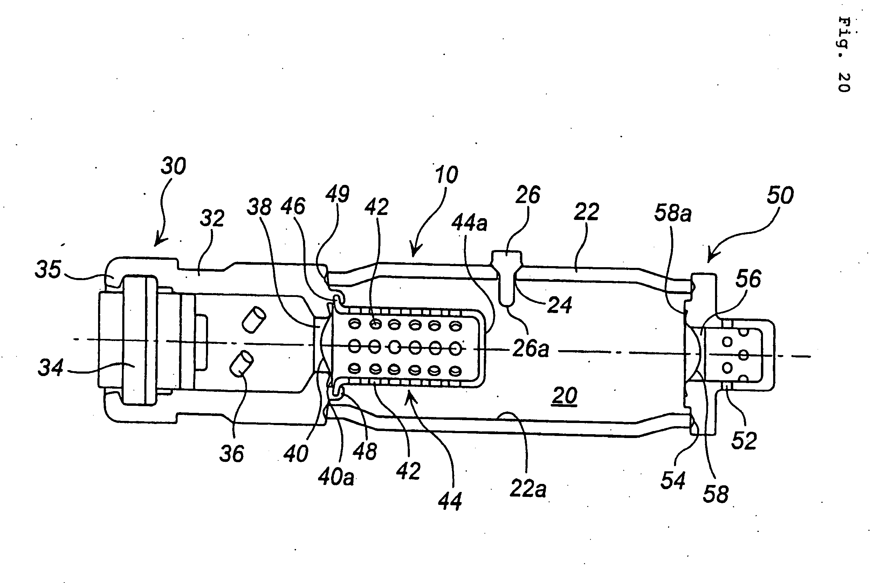

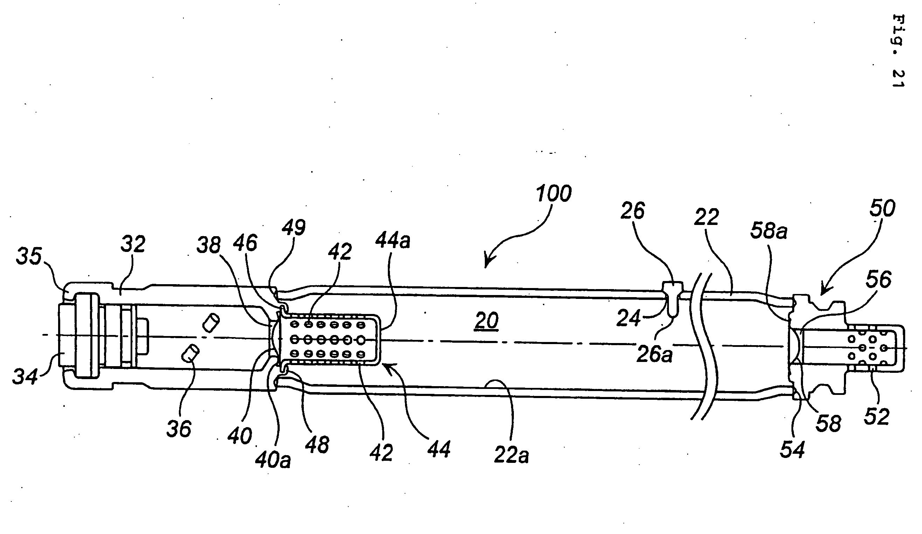

Inflators of the present invention will be explained with reference to Fig. 20 and Fig. 21. Fig. 20 and Fig. 21 are cross sectional views of embodiments of the present invention. An inflator 10 shown in Fig. 20 and an inflator 100 shown in Fig. 21 have almost the same structure except that the axial size of the inflator 10 is shorter than that of the inflator 100 and these inflators are different from each other in structure of a diffuser portion.

The inflator 10 comprises a pressurized gas chamber 20, a gas generator 30 and a diffuser 50, and outer diameters of these members are set to approximately the same.

The pressurized gas chamber 20 has an outer shell formed by a cylindrical pressurized gas chamber housing 22 and it is charged with pressurized gas comprising a mixture of argon and helium, not including oxygen gas.

The pressurized gas chamber housing 22 is symmetrical axially and radially, and outer diameters at both ends are reduced to about 22 mm relative to an outer diameter D (about 25 mm) at the central portion thereof. Since a length L of the pressurized gas housing 22 is set to about 50 to 250 mm, L/D is 1 to 10.

Since the pressurized gas chamber housing 22 has such a shape, it is unnecessary to adjust the orientation of the pressurized gas chamber housing in the axial and radial directions at a time of assembling, and joining work of the gas generator 30 and the diffuser portion 50 effected by resistance-welding or the like can be facilitated.

A charging hole 24 for pressurized gas is formed on a side surface of the pressurized gas chamber housing 22, and it is closed by a pin 26 after pressurized gas is charged. A distal end portion 26a of the pin 26 protrudes into the pressurized medium chamber 20, and the protruding portion thereof has such a length that combustion gas flow of a gas generating agent strikes against the protruding portion. By adjusting the length of the protruding portion of the pin 26, combustion gas can strike against the pin 26 to have combustion residues adhered to the pin 26. In Fig. 20, the pin 26 can be extended until the distal end portion 26a thereof abuts against the opposite wall surface 22a.

The gas generator 30 includes an ignition means (an electrical type igniter) 34 and a gas generating agent 36 accommodated in a gas generator housing 32, and it is connected to one end of the pressurized gas chamber 20. The inflator 10 is fixed by crimping the part 35 of the gas generator housing 35.

The gas generator housing 32 and the pressurized gas chamber housing 22 are connected at a connecting portion 49 by resistance-welding. When the inflator 10 is assembled in an air bag system, the ignition means 34 is connected to an external power source via a connector and a lead wire.

A first communication hole 38 between the pressurized gas chamber 20 and the gas generator 30 is closed by a first rupturable plate 40 transformed into a bowl-like shape due to a pressure of the pressurized gas, and the interior of the gas generator 30 is maintained in the normal pressure. The first rupturable plate 40 is resistance-welded to the gas generator housing 32 at a peripheral edge portion 40a.

A cap 44 having gas ejecting holes 42 is covered over the first rupturable plate 40 from the pressurized gas chamber 20 side. The cap 44 is attached to cover the first rupturable plate 40, so that combustion gas generated by combustion of the gas generating agent 36 is always ejected from the gas ejecting holes 42 via the cap 44.

The cap 44 has a flange portion 46 formed by folding an opening peripheral edge portion outwardly, and it is fixed by crimping a portion (a crimping portion) 48 of the gas generator housing 32 at the flange portion 46.

A diffuser portion 50 having gas discharging holes 52 for discharging the pressurized gas and the combustion gas is connected to the other end side of the pressurized gas chamber 20, and the diffuser portion 50 and the pressurized gas chamber housing 22 is resistance-welded to each other at a connecting portion 54. A filter made of wire mesh can be disposed inside the diffuser portion 50 in order to arrest the combustion residue, if required.

A second communication hole 56 between the pressurized gas chamber 20 and the diffuser portion 50 is closed by a second rupturable plate 58 transformed into a bowl-like shape due to pressure of the pressurized gas, and the interior of the diffuser portion 50 is maintained in the normal pressure. The second rupturable plate 58 is resistance-welded to the diffuser portion 50 at a peripheral edge portion 58a.

The detail of requirements (1) to (8) in an inflator 10 shown in Fig. 20 is as follows:

Requirements (1) and (6)

Pressurized gas comprising a mixture of argon and helium, but not including oxygen gas is charged in a gas generator 20 under a charging pressure of 30,000 to 67,000 kPa.

Requirements (2) and (5)

As a gas generating agent 36, one with a cylindrical shape comprising nitroguanidine/strontium nitrate/sodium carboxymethylcellulose/acid clay = 34.3/49.6/9.4/6.7 (mass%) (pressure index = 0.6, combustion flame temperature = 2098°C) is used in the amount of 1.9 to 5.3 g.

Requirement (3)

A ratio of an amount (mole number) of pressurized gas (A1) and an amount (mole number) of a gas generated by combustion of a gas generating agent (A2), A1/A2 = 1 to 20;

Requirement (4)

A ratio of a mass of pressurized gas (B1) and a mass of a gas generating agent (B2), B1/B2 = 1 to 20;

Requirement (7)

A ratio of an amount (mole number) of pressurized gas (A1) and a total surface opening ($cm^2$) of a gas generating agent (C), A1/C = 0.004 to 0.05 mole/$cm^2$;

Requirement (8)

A ratio of a total surface area ($cm^2$) of a gas generating agent (C) and a total area ($cm^2$) of gas discharging holes (D), C/D is 0.5 to 4;

Next, an operation of the inflator 10 shown in Fig. 20 which is assembled in an air bag system mounted on an automobile will be explained.

When an automobile receives the impact by collision, the igniter 34 is activated and ignited upon receiving an actuation signal from a control unit to burn the gas generating agent 36, and thereby, combustion gas with a high temperature is generated.

Thereafter, the first rupturable plate 40 is broken by a pressure rise inside the gas generator 30 due to the high temperature combustion gas, and combustion gas including a combustion residue flows into the cap 44 to be ejected from the gas ejecting holes 42. At this time, since a temperature difference between the pressurized gas and the combustion gas in the pressurized gas chamber 20 is large, the combustion gas is cooled rapidly, so that the high temperature combustion residue is cooled and solidified and a combustion residue also adheres to an inner wall surface of an end surface 44a of the cap 44. Further, since the combustion gas ejected strikes against an inner wall 22a of the pressurized gas chamber housing 22, the combustion residue adheres to an inner wall surface and it can be hardly discharged out of the inflator 10. Incidentally, part of the remaining combustion residue adheres to the pin 26, too.

Thereafter, since the second rupturable plate 58 is broken by a pressure rise inside the pressurized gas chamber 20, the pressurized gas and the combustion gas are discharged from the gas discharging holes 52 via the second communication hole 56 to inflate an air bag.

In such a course of action, since the inflator 10 is provided with the above-described requirements (1) to (6), or preferably (1) to (8), the internal pressure in the inflator is controlled not to rise excessively when the gas generating agent is burnt, even with the high pressurized-gas charging pressure of 30, 000 to 67, 000 kPa. As a result, the air bag can be inflated within an optimal time for protecting an occupant (generally, which is considered to be 10 to 30 msec).

Further, an internal pressure of the inflator when the gas generating agent is burnt can be controlled suitably, and thereby, the size of the inflator can be made small to downsize of the inflator while the charged amount of the pressurized gas is maintained to be equal to that in the prior art, that is, an amount of the pressurized gas for inflating the air bag is secured. And, as the result of downsizing the inflator, even when the charging pressure of the pressurized gas rises, an internal pressure of the inflator at an actuation can be controlled suitably.

The inflators of the present invention can be applied to various inflators such as an air bag inflator for a driver side, an air bag inflator for a passenger side next to a driver, an air bag inflator for a side collision, an inflator for a curtain air bag, an inflator for a knee-bolster, an inflator for an inflatable seat belt, an inflator for a tubular system, an inflator for a pretensioner and the like.

Examples

The present invention will be explained in detail as follows on the basis of Examples, but the present invention is not limited to these Examples.

Example 1

An inflator having the structure shown in Fig. 20 was produced. An entire length of the inflator was 110 mm, a length (L) of a pressurized gas chamber housing is 60 mm, an outer diameter (D) thereof is 25 mm, an thickness thereof is 2 mm (material: seamless steel pipe), and outer diameters of the other portions of the inflator were almost the same. The detail of the requirements (1) to (8) and the like are as follows:

Requirement (1): A mixed gas comprising 96 mole% of argon and 4 mole% of helium but not including oxygen gas;
Requirement (2): one in a cylindrical shape comprising nitroguanidine/strontium nitrate/sodium carboxymethylcellulose/acid clay = 34.3/49.6/9.4/6.7 (mass%) (pressure index = 0.6, combustion flame temperature = 2098°C) ;
Requirement (3): A1/A2 = 0.3/0.047 = 6.4;
Requirement (4): B1/B2 = 11.7/1.9 =6.2;
Requirement (5): The amount of a gas generating agent was 1.9 g;
Requirement (6) : The charging pressure of pressurized gas was 42,000 kPa;
Requirement (7): A1/C = 0.3/46.9 = 0.0064;
Requirement (8): C/E = 46.9/21.2 = 2.2;

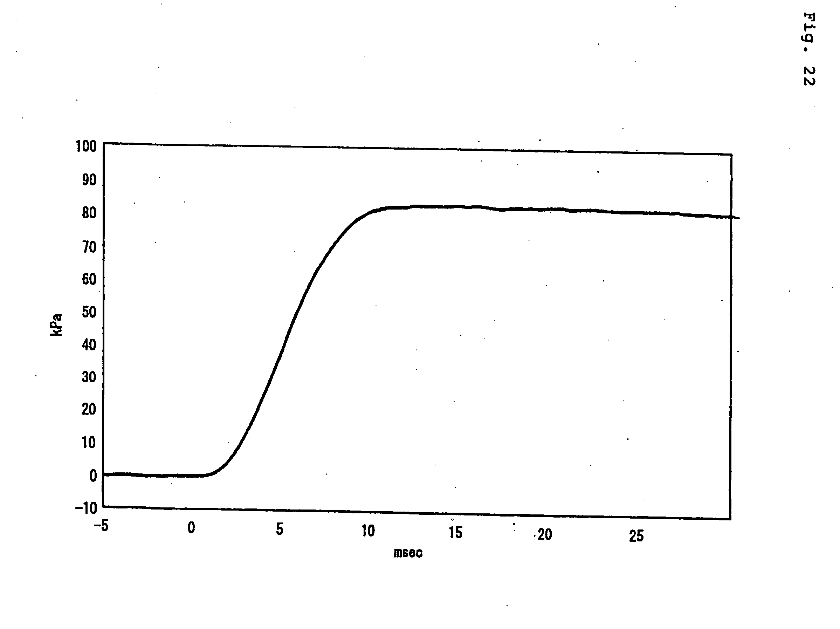

L/D = 2.4;
A well known 60 L tank combustion test, for example, as described in a paragraph 11 of JP-B No. 2963086, was conducted with this inflator. A tank curve is shown in Fig. 22.
As apparent from the tank curve shown in Fig. 22, even when the inflator itself was downsized and an internal pressure of the inflator was high before actuation, an internal pressure of the inflator at an actuation time was controlled by satisfying the requirements (1) to (8). As a result, it was confirmed that the air bag was inflated maximally at about 10 msec and that the inflator was normally actuated.

Example 2

An inflator having the structure shown in Fig. 21 was produced. An entire length of the inflator was 280 mm, a length (L) of a pressurized gas chamber housing is 200 mm, an outer diameter (D) thereof is 25 mm, an thickness thereof is 2 mm (material: seamless steel pipe), and outer diameters of the other portions of the inflator were almost the same. The detail of the requirements (1) to (8) and the like are as follows:

Requirement (1): A mixed gas comprising 96 mole% of argon and 4 mole% of helium but not including oxygen gas;
Requirement (2): one in a cylindrical shape comprising nitroguanidine/strontium nitrate/sodium carboxymethylcellulose/acid clay = 34.3/49.6/9.4/6.7 (mass%) (pressure index = 0. 6, combustion flame temperature = 2098°C) ;
Requirement (3): A1/A2 = 1.09/0.130 = 8.4;
Requirement (4): B1/B2 = 42/5.3 =7.9 ;
Requirement (5) : The amount of a gas generating agent was 5.3 g ;
Requirement (6) : The charging pressure of pressurized gas was 42, 000 kPa;
Requirement (7): A1/C = 1.09/72.5 = 0.015;
Requirement (8): C/E = 72.5/42.4 = 1.7;

L/D = 8.0;
The same 60-liter tank combustion test was conducted with this inflator as in Example 1, and a tank curve generally equal to that in Fig. 22 was obtained.
Incidentally, when compared with the fact that, in the paragraph 136 of in JP-A 9-76870 described as the prior art, there is a description that an interior of an inflator housing is maintained in a high pressure such as 4000 psi (27,600 kPa) or so, an internal pressure of the inflator of Example 1 at a time of actuation is expected to be much higher than that in the prior art. However, since the requirements (1) to (8) were provided, an internal pressure of the inflator was controlled so that the inflator was normally operated.

**Claims**

1. An inflator (10) inflating an air bag with combustion gas generated by combustion of a gas generating agent (36) and a pressurized medium, and comprising a pressurized gas chamber (20) having an outer shell formed with a cylindrical pressurized gas chamber housing (22) and charged with a pressurized gas, a gas generator (30) connected to the pressurized gas chamber (20) and including an ignition means (34) and a gas generating agent (36) accommodated in a gas generator housing (32), and a diffuser portion (50) connected to another portion of the pressurized gas chamber, wherein a first rupturable plate (40) closes between the pressurized gas chamber (20) and the gas generator (30), a second rupturable plate (58) closes between the pressurized gas chamber (20) and the diffuser portion (50), wherein the diffuser portion (50) is a cap having a plurality of gas discharging holes (52) through which gas passes,

whereby at least one of pieces generated by breaking the first and the second rupturable plates (40,58) and a residues contained in combustion gas produced by combustion of the gas generating agent (36) is prevented from flowing outside the inflator (10), wherein a cap (44,64) which has a plurality of gas discharging holes (42,62) through which gas passes and prevents at least one of pieces generated by breaking the first rupturable plate (40) and combustion residues of the gas generating agent (36) from flowing outside the inflator (10) is disposed inside the pressurized gas chamber (20) to cover the first rupturable plate (40) or the second rupturable plate (58) from the pressurized gas chamber (20), **characterised by** said cap (48,64) has a flange portion (46) formed by folding an opening peripheral edge portion outwardly, and it is fixed by crimping a portion (48) of said gas generator housing (32) at said flange portion (46).

2. An inflator (10) according to claim 1, wherein said cap (44) covers the first rupturable plate (40) from the pressurized gas chamber (20).

3. An inflator (10) according to claim 2, wherein a cap (64) which has a plurality of gas discharging holes (62) through which gas passes and prevents at least one of pieces generated by breaking the first rupturable plate (40) and combustion residues of the gas generating agent (36) from flowing outside the inflator (10) is disposed inside the pressurized gas chamber to cover the second rupturable plate (58) from the pressurized gas chamber (20).

4. An inflator (10) according to any one of claims 1 to 3, wherein the cap (44,64) comprises a cylindrical member having one end opened and the other end closed, and has a plurality of gas discharging holes (42,62) on at least a peripheral surface thereof.

5. An inflator (10) according to any one of claims 1 to 4, wherein, in the cap (44, 64), that the relationship between a distance L from a closed end surface of the cap (44,64) to a gas discharging hole (42,62) nearest to the closed end surface and a diameter D of the rupturable plate (40,58) satisfies the following formula: $L \geq D/2$.

6. An inflator (10) according to any one of claims 1 to 5, wherein the cap (44,64) is disposed such that the axial direction of the cap (44,64) and the axial direction of the pressurized gas chamber housing (22) coincide with each other.

7. An inflator (10) according to any one of claims 2 and 4 to 6, further provided with at lease one selected from the following requirements (a) to (c):

(a) an inner wall surface (22a) of the pressurized gas chamber housing (22) is rough;
(b) the gas ejecting hole (42) in the cap (44) is oriented so that combustion gas ejected from the gas ejecting hole (42) does not strike against an inner wall surface (22a) of a pressurized gas chamber housing (22) by airline distance; and
(c) a barrier member (310) is disposed in the vicinity of the gas ejecting hole (42), and combustion gas ejected from the gas ejecting hole (42) moves after it strikes against the barrier member (310).

8. An inflator (10) according to claim 7, wherein, in the requirement (a), the inner wall surface (22a) of the pressurized gas chamber housing (22) has a groove formed continuously or discontinuously in the circumferential direction.

9. An inflator (10) according to any one of claims 7 or 8, wherein, in the requirement (b), the gas ejecting hole (42) is provided on a side surface of the cap (44) and is opened towards the gas generator (30).

10. An inflator (10) according to any one of claims 7 or 8, wherein, in the requirement (b) the gas ejecting hole (42) is provided on an side surface of the cap (44), and a member (45) for circumferentially restricting an ejecting direction of combustion gas from the gas ejecting hole (42) is provided.

11. An inflator (10) according to any one of claims 7 or 8, wherein, in the requirement (b), the ejecting hole (42) is provided on an end surface of the cap (44), and a member (45) for circumferentially restricting an ejecting direction of combustion gas from the gas ejecting hole (42) is provided.

12. An inflator (10) according to any one of claims 7 to 11, wherein, in the requirement (c), the barrier member (310) is cylindrical, one end side thereof is closed integrally with the end surface of the cap (44b), the other end thereof is opened and a side surface thereof is formed to face the gas ejecting hole (42) provided in the side surface of the cap (44a) with a gap, and combustion gas moves from the opening after it strikes against a side surface inner wall (311) of the cylindrical member (310).

13. An inflator (10) according to any one of claims 7 to 11, wherein, in the requirement (c), the barrier member (410) is disk-shaped, integrated with the end surface of the cap (44b) and extended from the end surface of the cap (44b) towards an inner wall surface (22a) of the pressurized gas chamber housing (22), and after combustion gas ejected from the gas ejecting hole (42) provided in the side surface of the cap (44a) strikes against a peripheral edge portion (411) of the barrier member (410), the combustion gas moves from a gap between the inner wall surface (22a) of the pressurized gas chamber housing (22) and the peripheral edge portion (411) of the barrier member (410).

14. An inflator (10) according to claim any one of claims 7 to 11, wherein, in the requirement (c), the barrier member (510) is disk-shaped, integrated with the end surface of the cap (44b) and extended from the end surface of the cap (44b) towards an inner wall surface (22a) of the pressurized gas chamber housing (22) so that a peripheral edge portion (511) thereof abuts on the inner wall surface (22a), a gas passing port (512) is provided in the peripheral edge portion (511) of the barrier member (510) and a member (513) for circumferentially restricting an ejecting direction of gas from the gas passing port (512) is provided, and combustion gas ejected from the gas ejecting hole (42) provided in the side surface of the cap (44a) is ejected from the gas passing port (512).

15. An inflator (10) according to any one of claims 1 to 14, wherein the housing (22) forming the pressurized gas chamber (20) is symmetrical regarding the axial and radial directions.

16. An inflator (10) according to any one of claims 1 to 15, wherein the pin (26) protrudes into the pressurized gas chamber (20) and the protruding portion (26a) thereof has such a length that combustion gas flow of the gas generating agent (36) strikes against the protruding portion (26a), wherein a pressurized gas charging hole (24) is formed in a side surface of the pressurized gas chamber housing (22) and the charging hole (24) is closed by said pin (26) after the pressurized gas is charged.

17. An inflator (10) according to any one of claims 1 to 16, wherein the gas generator housing (32) and the pressurized gas chamber housing (22) are connected to each other by resistance-welding.

18. An inflator (10) according to any one of claims 1 to 17, wherein, in the gas generating agent (36), a melting point of combustion residues produced by combustion of the gas generating agent (36) is not less than a discharging temperature of a gas generated from the gas generating agent (36).

19. An inflator (10) according to any one of claims 1 to 18, wherein the gas generating agent (36) includes 20 to 60 mass% of nitroguanidine and 80 to 40 mass% of an oxidizing agent.

20. An inflator (10) according to any one of claims 1 to 19, wherein the pressurized gas comprises argon and helium.

21. An inflator (10) according to any one of claims 1 to 20, wherein a ratio (A/B) of mole number (A) of the pressurized gas and a mole number (B) of a gas generated by combustion of the gas generating agent (36) is 0.2 to 10.

**Patentansprüche**

1. Gasgenerator (10), der einen Airbag mit Verbrennungsgas, das durch Verbrennung eines Gaserzeugungsmittels (36) erzeugt wird, und mit einem unter Druck stehenden Medium aufbläst, und der eine Druckgaskammer (20), die eine äußere Hülle, die mit einem zylindrischen Druckgaskammer-Gehäuse (22) versehen und mit einem Druckgas gefüllt ist, eine Gaserzeugungseinrichtung (30), die mit der Druckgaskammer (20) verbunden ist und eine Zündeinrichtung (34) sowie ein Gaserzeugungsmittel (36) enthält, das in einem Gehäuse der Gaserzeugungseinrichtung (32) aufgenommen ist, und einen Diffusor-Abschnitt (50) umfasst, der mit einem anderen Abschnitt der Druckgaskammer verbunden ist, wobei eine erste Berstplatte (40) einen Verschluss zwischen der Druckgaskammer (20) und der Gaserzeugungseinrichtung (30) bildet, eine zweite Berstplatte (58) einen Verschluss zwischen der Druckgaskammer (20) und dem Diffusor-Abschnitt (50) bildet, und der Diffusor-Abschnitt (50) eine Kappe mit einer Vielzahl von Gasausstoßlöchern (52) ist, durch die Gas hindurchtritt, so dass verhindert wird, dass Teile, die durch Brechen der ersten und der zweiten Berstplatte (40, 58) erzeugt werden, oder/und Rückstände, die in Verbrennungsgas enthalten sind, das durch Verbrennung des Gaserzeugungsmittels (36) erzeugt wird, aus dem Gasgenerator (10) anströmen, eine Kappe (44, 64), die eine Vielzahl von Gasausstoßlöchern (42, 62) hat, durch die Gas hindurchtritt, und die verhindert, dass Teile, die durch Brechen der ersten Berstplatte (40) erzeugt werden, oder/und Verbrennungsrückstände des Gaserzeugungsmittels (36) aus dem Gasgenerator (10) ausströmen, im Inneren der Druckgaskammer (20) so angeordnet ist, dass die erste Berstplatte (40) oder die zweite Berstplatte (58) von der Druckgaskammer (20) her abgedeckt werden, **dadurch gekennzeichnet, dass** die Kappe (48, 64) einen Flanschabschnitt (46) hat, der ausgebildet wird, indem ein Öffnungs-Umfangsrandabschnitt nach außen gebogen wird, und sie befestigt wird, indem ein Abschnitt (48) des Gehäuses der Gaserzeugungseinrichtung (32) an dem Flanschabschnitt (46) gebördelt wird.

2. Gasgenerator (10) nach Anspruch 1, wobei die Kappe (44) die erste Berstplatte (40) von der Druckgaskammer (20) her abdeckt.

3. Gasgenerator (10) nach Anspruch 2, wobei eine Kappe (64), die eine Vielzahl von Gasausstoßlöchern (62) aufweist, durch die Gas hindurchtritt, und die verhindert, dass Teile, die durch Brechen der ersten Berstplatte (40) erzeugt werden, oder/und Verbrennungsrückstände des Gaserzeugungsmittels (36) aus dem Gasgenerator (10) ausströmen, im Inneren der Druckgaskammer (20) so angeordnet ist, dass sie die zweite Berstplatte (58) von der Druckgaskammer (20) her abdeckt.

4. Gasgenerator (10) nach einem der Ansprüche 1 bis 3, wobei die Kappe (44, 64) ein zylindrisches Element umfasst, dessen eines Ende offen ist und dessen anderes Ende geschlossen ist, und eine Vielzahl von Gasausstoßlöchern (42, 62) an wenigstens einer Umfangsfläche derselben aufweist.

5. Gasgenerator (10) nach einem der Ansprüche 1 bis 4, wobei bei der Kappe (44, 64) die Beziehung zwischen einem Abstand L von einer geschlossenen Endfläche der Kappe (44, 64) zu einem Gasausstoßloch (42, 62), das sich am nächsten an der geschlossenen Endfläche befindet, und einem Durchmesser D der Berstplatte (40, 58) die Formel $L \geq D/2$ erfüllt.

6. Gasgenerator (10) nach einem der Ansprüche 1 bis 5, wobei die Kappe (44, 64) so angeordnet ist, dass sich die axiale Richtung der Kappe (44, 64) und die axiale Richtung des Druckgaskammer-Gehäuses (22) decken.

7. Gasgenerator (10) nach einem der Ansprüche 2 und 4 bis 6, die des Weiteren wenigstens einer von den folgenden Anforderungen a) bis c) entspricht:

a) eine Innenwandfläche (22a) des Druckgaskammer-Gehäuses (22) ist rau;
b) das Gasausstoßloch (42) in der Kappe (44) ist so ausgerichtet, dass über das Gasausstoßloch (42) ausgestoßenes Brenngas über Luftlinienentfernung nicht auf eine Innenwandfläche (22a) eines Druckgaskammer-Gehäuses (22) auftrifft; und
c) ein Sperrelement (310) ist in der Nähe des Gasausstoßlochs (42) angeordnet, und über das Gasausstoßloch (42) ausgestoßenes Brenngas bewegt sich, nachdem es auf das Sperrelement (310) aufgetroffen ist.

8. Gasgenerator (10) nach Anspruch 7, wobei bei Anforderung a) die Innenwandfläche (22a) des Druckgaskammer-Gehäuses (22) eine Nut aufweist, die in der Umfangsrichtung durchgehend oder nicht durchgehend ausgebildet ist.

9. Gasgenerator (10) nach einem der Ansprüche 7 oder 8, wobei bei der Anforderung b) das Gasausstoßloch (42) an einer Seitenfläche der Kappe (44) vorhanden ist und zu der Gaserzeugungseinrichtung (30) hin offen ist.

10. Gasgenerator (10) nach einem der Ansprüche 7 oder 8, wobei bei der Anforderung b) das Gasausstoßloch (42) an einer Seitenfläche der Kappe (44) vorhanden ist und ein Element (45) vorhanden ist, mit dem eine Ausstoßrichtung von Verbrennungsgas über das Gasausstoßloch (42) in Umfangsrichtung eingeschränkt wird.

11. Gasgenerator (10) nach einem der Ansprüche 7 oder 8, wobei bei der Anforderung b) das Ausstoßloch (42) an einer Endfläche der Kappe (44) vorhanden ist und ein Element (45) vorhanden ist, mit dem eine Ausstoßrichtung von Verbrennungsgas über das Gasausstoßloch (42) in Umfangsrichtung eingeschränkt wird.

12. Gasgenerator (10) nach einem der Ansprüche 7 bis 11, wobei bei der Anforderung c) das Sperrelement (310) zylindrisch ist, eine Endseite desselben integral mit der Endfläche der Kappe (44b) geschlossen ist, das andere Ende desselben offen ist und eine Seitenfläche desselben so ausgebildet ist, dass sie dem in der Seitenfläche der Kappe (44a) vorhandenen Gasausstoßloch (42) mit einem Zwischenraum zugewandt ist, und sich Verbrennungsgas über die Öffnung bewegt, nachdem es auf eine Seitenflächen-Innenwand (311) des zylindrischen Elementes (310) aufgetroffen ist.

13. Gasgenerator (10) nach einem der Ansprüche 7 bis 11, wobei bei der Anforderung c) das Sperrelement (410) scheibenförmig ist, integral mit der Endfläche der Kappe (44b) ausgebildet ist und sich von der Endfläche der Kappe (44b) zu einer Innenwandfläche (22a) des Druckgaskammer-Gehäuses (22) hin erstreckt, und nachdem Verbrennungsgas, das über das in der Seitenfläche der Kappe (44a) vorhandene Gasausstoßloch (42) ausgestoßen wird, auf einen Umfangsrandabschnitt (411) des Sperrelementes (410) aufgetroffen ist, sich das Verbrennungsgas über einen Zwischenraum zwischen der Innenwandfläche (22a) des Druckgaskammer-Gehäuses (22) und dem Umfangsrandabschnitt (411) des Sperrelementes (410) bewegt.

14. Gasgenerator (10) nach einem der Ansprüche 7 bis 11, wobei bei der Anforderung c) das Sperrelement (510) scheibenförmig ist, integral mit der Endfläche der Kappe (44b) ausgebildet ist und sich von der Endfläche der Kappe (44b) zu einer Innenwandfläche (22a) des Druckgaskammer-Gehäuses (22) hin erstreckt, so dass ein Umfangsrandabschnitt (511) desselben an der Innenwandfläche (22a) anliegt, ein Gasdurchlasskanal (512) in dem Umfangsrandabschnitt (511) des Sperrelementes (510) vorhanden ist und ein Element (513) vorhanden ist, mit dem eine Ausstoßrichtung von Gas über den Gasdurchlasskanal (512) in Umfangsrichtung eingeschränkt wird, und Verbrennungsgas, das über das in der Seitenfläche der Kappe (44a) vorhandene Gasausstoßloch (42) ausgestoßen wird, über den Gasdurchlasskanal (512) ausgestoßen wird.

15. Gasgenerator (10) nach einem der Ansprüche 1 bis 14, wobei das Gehäuse (22), das die Druckgaskammer (20) bildet, in axialer und radialer Richtung symmetrisch ist.

16. Gasgenerator (10) nach einem der Ansprüche 1 bis 15, wobei der Bolzen (26) in die Druckgaskammer (20) hinein vorsteht und der vorstehende Abschnitt (26a) desselben eine Länge hat, durch die Strom von Verbrennungsgas des Gaserzeugungsmittels (36) auf den vorstehenden Abschnitt (26a) auftrifft, und ein Druckgas-Füllloch (24) in einer Seitenfläche des Druckgaskammer-Gehäuses (22) ausgebildet ist und das Füllloch (24) durch den Bolzen (26) verschlossen wird, nachdem das Druckgas eingefüllt worden ist.

17. Gasgenerator (10) nach einem der Ansprüche 1 bis 16, wobei das Gehäuse der Gaserzeugungseinrichtung (32) und das Druckgaskammer-Gehäuse (22) durch Widerstandsschweißen miteinander verbunden werden.

18. Gasgenerator (10) nach einem der Ansprüche 1 bis 17, wobei bei dem Gaserzeugungsmittel (36) ein Schmelzpunkt von Verbrennungsrückständen, die durch Verbrennung des Gaserzeugungsmittels (36) erzeugt werden, nicht niedriger ist als eine Ausstoßtemperatur eines aus dem Gaserzeugungsmittel (36) erzeugten Gases.

19. Gasgenerator (10) nach einem der Ansprüche 1 bis 18, wobei das Gaserzeugungsmittel (36) 20 bis 60 Masse-% Nitroguanidin und 80 bis 40 Masse-% eines Oxidationsmittels enthält.

20. Gasgenerator (10) nach einem der Ansprüche 1 bis 19, wobei das Druckgas Argon und Helium umfasst.

21. Gasgenerator (10) nach einem der Ansprüche 1 bis 20, wobei ein Verhältnis (A/B) einer Molzahl (A) des Druckgases und einer Molzahl (B) eines durch Verbrennung des Gaserzeugungsmittels (36) erzeugten Gases 0,2 zu 10 beträgt.

**Revendications**

1. Gonfleur (10) gonflant un airbag avec un gaz de combustion généré par la combustion d'un agent générateur de gaz (36) et un milieu pressurisé, et comprenant une chambre à gaz pressurisé (20) comportant une coque externe formée avec un logement de chambre à gaz pressurisé cylindrique (22) et chargée avec un gaz pressurisé, un générateur de gaz (30) raccordé à la chambre à gaz pressurisé (20) et comprenant un système d'allumage (34) et un agent générateur de gaz (36) situé dans un logement de générateur de gaz (32) et une partie de diffuseur (50) connectée à une autre partie de la chambre à gaz pressurisé, dans lequel une première plaque susceptible de se briser (40) ferme entre la chambre à gaz pressurisé (20) et le générateur de gaz (30), une seconde plaque susceptible de se briser (58) ferme entre la chambre à gaz pressurisé (20) et la partie de diffuseur (50), dans laquelle la partie de diffuseur (50) est un capuchon comportant une pluralité d'orifices de décharge de gaz (52) à travers lesquels passe le gaz,
dans lequel au moins une des pièces générées par la rupture de la première et de la seconde plaques susceptibles de se briser (40, 58) et un résidu contenu dans le gaz de combustion produit par la combustion de l'agent générateur de gaz (36) ne peuvent pas s'échapper hors du gonfleur (10), dans lequel un capuchon (44, 64) qui est doté d'une pluralité d'orifices de décharge de gaz (42, 62) à travers lesquels passe le gaz et empêche au moins une des pièces générées par la rupture de la première plaque susceptible de se briser (40) et des résidus de combustion de l'agent générateur de gaz (36) de s'échapper hors du gonfleur (10), est disposé à l'intérieur de la chambre à gaz pressurisé (20), afin de couvrir la première plaque susceptible de se briser (40) ou la seconde plaque susceptible de se briser (58) de la chambre à gaz pressurisé (20), **caractérisé en ce que** ledit capuchon (48, 64) comporte une partie de bride (46) formée en repliant une partie du bord périphérique d'ouverture vers l'extérieur, et est fixé en sertissant une partie (48) dudit logement de générateur de gaz (32) sur ladite partie de bride (46).

2. Gonfleur (10) selon la revendication 1, dans lequel ledit capuchon (44) couvre la première plaque susceptible de se briser (40) de la chambre à gaz pressurisé (20).

3. Gonfleur (10) selon la revendication 2, dans lequel un capuchon (64) qui comporte une pluralité d'orifices de décharge de gaz (62) à travers lesquels passe le gaz et empêche au moins une des pièces générées par la rupture de la première plaque susceptible de se briser (40) et des résidus de combustion de l'agent générateur de gaz (36) de s'échapper hors du gonfleur (10), est disposé à l'intérieur de la chambre à gaz pressurisé, afin de recouvrir la seconde plaque susceptible de se briser (58) de la chambre à gaz pressurisé (20).

4. Gonfleur (10) selon l'une quelconque des revendications 1 à 3, dans lequel le capuchon (44, 64) comprend un élément cylindrique présentant une extrémité ouverte et l'autre extrémité fermée, et une pluralité d'orifices de décharge de gaz (42, 62) sur au moins une surface périphérique correspondante.

5. Gonfleur (10) selon l'une quelconque des revendications 1 à 4, dans lequel, dans le capuchon (44, 64), la relation entre une distance L par rapport à une surface à extrémité fermée du capuchon (44, 64) et un orifice de décharge de gaz (42, 62) le plus proche de la surface à extrémité fermée et un diamètre D de la plaque susceptible de se briser (40, 58) satisfait la formule suivante : $L \geq D/2$.

6. Gonfleur (10) selon l'une quelconque des revendications 1 à 5, dans lequel le capuchon (44, 64) est disposé de sorte que la direction axiale du capuchon (44, 64) et la direction axiale du logement de la chambre à gaz pressurisé (22) coïncident l'une avec l'autre.

7. Gonfleur (10) selon l'une quelconque des revendications 2 et 4 à 6, doté en outre d'au moins un élément choisi parmi les conditions requises (a) à (c) suivantes :

(a) une surface de paroi interne (22a) du logement de chambre à gaz pressurisé (22) est rugueuse ;
(b) l'orifice d'éjection de gaz (42) dans le capuchon (44) est orienté de sorte que le gaz de combustion éjecté de l'orifice d'éjection de gaz (42) ne frappe pas la surface de paroi interne (22a) du logement de chambre à gaz pressurisé (22) sur une distance en ligne directe, et
(c) un élément barrière (310) est disposé à proximité de l'orifice d'éjection de gaz (42), et un gaz de combustion éjecté depuis l'orifice d'éjection de gaz (42), se déplace après avoir frappé l'élément barrière (310).

8. Gonfleur (10) selon la revendication 7, dans lequel, dans la condition requise (a), la surface de la paroi interne (22a) du logement de chambre à gaz pressurisé (22) comporte une cannelure formée de manière continue ou discontinue dans la direction circonférentielle.

9. Gonfleur (10) selon l'une quelconque des revendications 7 ou 8, dans lequel, dans la condition requise (b), l'orifice d'éjection de gaz (42) est ménagé sur une surface latérale du capuchon (44) et est ouvert vers le générateur de gaz (30).

10. Gonfleur (10) selon l'une quelconque des revendications 7 ou 8, dans lequel, dans la condition requise (b), l'orifice d'éjection de gaz (42) est ménagé sur une surface latérale du capuchon (44), et un élément (45) pour limiter de manière circonférentielle une direction d'éjection du gaz de combustion depuis l'orifice d'éjection de gaz (42) est prévu.

11. Gonfleur (10) selon l'une quelconque des revendications 7 ou 8, dans lequel, dans la condition requise (b), l'orifice d'éjection (42) est ménagé sur une surface d'extrémité du capuchon (44) et un élément (45) pour limiter de manière circonférentielle une direction d'éjection du gaz de combustion depuis l'orifice d'éjection de gaz (42) est prévu.

**12.** Gonfleur (10) selon l'une quelconque des revendications 7 à 11, dans lequel, dans la condition requise (c), l'élément barrière (310) est cylindrique, un côté d'extrémité correspondant est fermé intégralement avec la surface d'extrémité du capuchon (44b), l'autre extrémité correspondante est ouverte et une surface latérale correspondante est formée, de façon à faire face à l'orifice d'éjection du gaz (42) ménagé dans la surface latérale du capuchon (44a) avec un intervalle, et le gaz de combustion se déplace depuis l'ouverture après avoir frappé une paroi interne de la surface latérale (311) de l'élément cylindrique (310).

**13.** Gonfleur (10) selon l'une quelconque des revendications 7 à 11, dans lequel, dans la condition requise (c), l'élément barrière (410) est en forme de disque, intégré avec la surface d'extrémité du capuchon (44b) et étendu depuis la surface d'extrémité du capuchon (44b) vers une surface de paroi interne (22a) du logement de la chambre à gaz pressurisé (22), et après que le gaz de combustion a été éjecté de l'orifice d'éjection de gaz (42) ménagé dans la surface latérale du capuchon (44a), il frappe à nouveau une partie de bord périphérique (411) de l'élément barrière (410), le gaz de combustion se déplace sur un intervalle entre la surface de paroi interne (22a) du logement de chambre à gaz pressurisé (22) et la partie de bord périphérique (411) de l'élément barrière (410).

**14.** Gonfleur (10) selon l'une quelconque des revendications 7 à 11, dans lequel, dans la condition requise (c), l'élément barrière (510) est en forme de disque, intégré avec la surface d'extrémité du capuchon (44b) et étendu depuis la surface d'extrémité du capuchon (44b) vers une surface de paroi interne (22a) du logement de chambre à gaz pressurisé (22), de sorte qu'une partie de bord périphérique (511) correspondante vienne en butée sur la surface de paroi interne (22a), un orifice de passage de gaz (512) est ménagé dans la partie de bord périphérique (511) de l'élément barrière (510) et un élément (513) pour limiter de manière circonférentielle une direction d'éjection du gaz depuis l'orifice de passage de gaz (512) est prévu, et un gaz de combustion éjecté de l'orifice d'éjection de gaz (42) ménagé dans la surface latérale du capuchon (44a) est éjecté de l'orifice de passage de gaz (512).

**15.** Gonfleur (10) selon l'une quelconque des revendications 1 à 14, dans lequel le logement (22) formant la chambre à gaz pressurisé (20) est symétrique par rapport aux directions axiale et radiale.

**16.** Gonfleur (10) selon l'une quelconque des revendications 1 à 15, dans lequel la broche (26) ressort dans la chambre à gaz pressurisé (20) et la partie saillante (26a) correspondante a une longueur telle que le flux de gaz de combustion de l'agent de génération de gaz (36) frappe à nouveau la partie saillante (26a), dans lequel un orifice de charge du gaz pressurisé (24) est ménagé sur une surface latérale du logement de chambre à gaz pressurisé (22) et l'orifice de charge (24) est fermé par ladite broche (26) après le chargement dudit gaz pressurisé.

**17.** Gonfleur (10) selon l'une quelconque des revendications 1 à 16, dans lequel le logement du générateur de gaz (32) et le logement de la chambre à gaz pressurisé (22) sont reliés l'un à l'autre par un soudage par résistance.

**18.** Gonfleur (10) selon l'une quelconque des revendications 1 à 17, dans lequel, dans l'agent générateur de gaz (36), un point de fusion des résidus de combustion produits par la combustion de l'agent générateur de gaz (36) n'est pas inférieur à une température de décharge d'un gaz généré par l'agent générateur de gaz (36).

**19.** Gonfleur (10) selon l'une quelconque des revendications 1 à 18, dans lequel l'agent générateur de gaz (36) comprend 20 à 60% en masse de nitroguanidine et 80 à 40% en masse d'un agent oxydant.

**20.** Gonfleur (10) selon l'une quelconque des revendications 1 à 19, dans lequel le gaz pressurisé comprend l'argon et l'hélium.

**21.** Gonfleur (10) selon l'une quelconque des revendications 1 à 20, dans lequel un rapport (A/B) entre le nombre de moles (A) du gaz pressurisé et le nombre de mole (B) d'un gaz généré par la combustion de l'agent générateur de gaz (36) est de 0,2 à 10.

Fig. 1

Fig. 2

Fig. 3

EP 1 867 532 B1

Fig. 4

35

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

EP 1 867 532 B1

Fig. 18

49

EP 1 867 532 B1

Fig. 19

50

Fig. 20

Fig. 21

Fig. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9076870 A
- US 3966226 A
- US 4018457 A
- JP 8282427 A
- JP 4410443 B
- US 6189922 A
- JP 2002166817 A
- JP 2963086 B